(19) Europäisches Patentamt
European Patent Office
Office européen des brevets

(11) EP 3 362 523 B1

(12) **FASCICULE DE BREVET EUROPEEN**

(45) Date de publication et mention de la délivrance du brevet:
**07.08.2019 Bulletin 2019/32**

(21) Numéro de dépôt: **16794708.4**

(22) Date de dépôt: **14.10.2016**

(51) Int Cl.:
***C09D 5/02*** *(2006.01)* ***C08J 7/04*** *(2006.01)*
***C09D 133/10*** *(2006.01)*

(86) Numéro de dépôt international:
**PCT/FR2016/052670**

(87) Numéro de publication internationale:
**WO 2017/064445 (20.04.2017 Gazette 2017/16)**

(54) **FILM COMPOSITE POLYESTER/PRIMAIRE/METAL PERFECTIONNE COHESIF ET IMPERMEABLE AUX GAZ, SON PROCEDE DE FABRICATION ET LE PRIMAIRE MIS EN OEUVRE DANS CE PROCEDE**

KOHÄSIVE UND GASUNDURCHLÄSSIGE VERBESSERTE POLYESTER/PRIMER/METALLVERBUNDFOLIE, VERFAHREN ZUR HERSTELLUNG DAVON UND PRIMER ZUR VERWENDUNG IN DIESEM VERFAHREN

IMPROVED POLYESTER/PRIMER/METAL COMPOSITE FILM THAT IS COHESIVE AND IMPERMEABLE TO GAS, METHOD FOR PRODUCING SAME AND THE PRIMER USED IN SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2015 FR 1559896**

(43) Date de publication de la demande:
**22.08.2018 Bulletin 2018/34**

(73) Titulaire: **Toray Films Europe**
**01700 Saint-Maurice-de-Beynost (FR)**

(72) Inventeurs:
- **OUZINEB, Keltoum**
**69100 Villeurbanne (FR)**
- **PENACHE, Maria Cristina**
**38230 Chavanoz (FR)**
- **DERVEAUX, Laurent**
**38390 Vertrieu (FR)**

(74) Mandataire: **Cabinet Plasseraud**
**235 Cours Lafayette**
**69006 Lyon (FR)**

(56) Documents cités:
**WO-A1-2015/092329**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 362 523 B1

## Description

### DOMAINE DE L'INVENTION

Le domaine technique de l'invention est celui des films plastiques, notamment des films polyester. Plus précisément, l'invention concerne des films composites polyester/métal (stratifiés), comprenant un support formé par l'une ou plusieurs couches de polyester, ledit support étant revêtu sur au moins l'une de ses faces d'un film métallique.

Plus particulièrement encore, l'invention vise un film composite comportant un primaire d'accrochage à l'interface métal/polyester.

La fabrication de ces films composites polyester/métal, à l'aide d'au moins une couche interfaciale d'au moins une couche de primaire d'accrochage, est un autre objet de de la présente invention de même que la composition de primaire d'accrochage destinée à enduire les films polymères et permettant, d'une part, d'améliorer l'adhérence en condition de haute température et humidité entre le film et un revêtement final de type métallique, et d'autre part de conférer au film revêtu de bonnes propriétés barrières au gaz.

Les polyesters plus spécifiquement concernés sont les copolymères semi aromatiques tels que : le Polyéthylène téréphtalate (PET), le Polybutylène téréphtalate (PBT), le Polytriméthylène téréphtalate (PTT), Polyéthylène naphtalate (PEN), les copolymères aromatiques comme le Vectran.

### ARRIERE-PLAN TECHNOLOGIQUE

Les films plastiques et notamment les films polyester sont bien connus pour leurs excellentes propriétés en termes de stabilité thermique, de stabilité dimensionnelle, de résistance chimique et d'énergie de surface relativement haute. Ce sont des matériaux très résistants et particulièrement recherchés comme supports pour des revêtements variés. Les films composites comprenant un film plastique comme support et un revêtement ont de nombreuses applications: l'emballage, et en particulier l'emballage alimentaire, la protection d'objets variés (produits électroménagers, vitres, ...), l'isolation thermique et la protection contre l'humidité dans le secteur du bâtiment (panneau d'isolation sous vide).

Les applications dans l'emballage alimentaire de ces films composites polyesters/métal exigent, en particulier, des propriétés barrières aux gaz que sont l'oxygène et la vapeur d'eau. Mais ces propriétés barrières ne sont pas seules spécifications attendues, pour ces films composites polyester/métal. Il importe également qu'ils soient cohésifs et qu'ils ne se délaminent pas, lors de la manipulation, de la fabrication, de l'utilisation et du stockage des produits pour lesquels ils sont destinés.

Or, ces films composites ont pour inconvénient de présenter une adhésion insuffisante entre les supports, en particulier les supports polyester, et le revêtement métallique, rendant ainsi leur utilisation inefficace et/ou non fiable et donc impropre. Ces problèmes d'adhésion sont particulièrement aigus lorsque le matériau composite est soumis à de fortes contraintes. Par exemple, dans le domaine alimentaire, les emballages peuvent être soumis à des conditions d'humidité et de température élevées dans les procédés de remplissage à chaud, de pasteurisation ou de stérilisation. Il est connu que, dans ces situations, les revêtements métalliques n'adhèrent pas correctement au film polyester par exemple PET. Ce manque ou cette perte d'adhérence implique que l'effet barrière à l'oxygène et à la vapeur d'eau attendu est perdu, ce qui provoque une altération du contenu alimentaire et un risque pour la santé des consommateurs.

Pour tenter de résoudre ce problème de liaison entre le support et son revêtement métallique, plusieurs solutions ont été proposées par le passé. Ainsi, les traitements physiques (traitement à la flamme, décharges corona, traitement abrasif) ou physico-chimiques (traitements par un acide, greffage de fonctions chimiques) à la surface des films ont été testés. Ces divers traitements présentant de nombreux inconvénients, l'application d'un enduit intermédiaire leur a été préférée car plus pérenne.

Cet enduit intermédiaire, également couramment nommé couche primaire d'accrochage, est conçu pour avoir, d'une part, une bonne adhérence au support et, d'autre part, une bonne adhérence au revêtement métallique, est classiquement à base de (co)polymères acryliques. La mise en place de cette couche primaire d'accrochage sur le support est réalisée par enduction d'une émulsion aqueuse de (co)polymères acryliques.

La demande de brevet PCT WO2014/102487A1 décrit ainsi un film PET enduit d'une couche de primaire d'accrochage et revêtu d'une couche d'aluminium obtenue par évaporation sous vide.

L'enduction du primaire d'accrochage est réalisée à l'aide d'un latex acrylique A ou d'un latex acrylique B (15 ou 20% d'extrait sec) réticulé avec ou sans réticulant Cymel 303 LF ou Cymel 1123 de chez Cytec Industries Inc.

Le latex A est préparé selon l'exemple 1 du brevet EP0260203B1.

Son taux de gel est inférieur à 50 % en poids par rapport au poids total de polymère(s) acrylique(s) et/ou méthacrylique(s) et, son taux de copolymère(s) d'acide(s) acryliques et/ou méthacrylique est d'au moins 10% du poids total de polymères. Le primaire d'accrochage obtenu à partir du latex A permet d'obtenir des films composites avec des adhésions métal, en conditions sèches (température ambiante/hygrométrie < 50%), d'au moins 1000 gF/38mm, tandis qu'elles ne sont

que de 200, 280 ou 480 gF/38mm en conditions humides, dans un test d'adhésion TA est mesuré selon les recommandations AIMCAL TP- 105-92 (Metallizing Technical Référence éditée par Association of Industrial Metallizers, Coaters and Laminators).
Le latex B commercialisé sous le nom BT-67 par la société DSM, comprend des particules de polymères acrylique(s) et/ou méthacrylique et présente un taux de gel d'au moins 50% en poids par rapport au poids total de polymère(s) acrylique(s) et/ou méthacrylique(s).

Le primaire d'accrochage obtenu à partir du latex B permet d'obtenir des films composites avec des adhésions métal, en conditions sèches, d'au moins 1000 gF/38mm, tandis qu'elles ne sont que de 280, 400, 480 ou 800 gF/38mm en conditions humides, dans le test d'adhésion TA.
L'effet barrière vis-à-vis de l'O2 est donnée par une PO2 (50% HR 23°C en cc/$m^2$/j) minimale de 1 pour le latex B avec L/R =80/20, et < 0,3 pour le latex A avec L/R=80/20. L'effet barrière vis-à-vis de l'H2O est donnée par une PH2O (90% HR 38°C en g/$m^2$/j) minimale de 0,27 pour le latex B avec L/R =80/20, et < 0,3 pour le latex A avec L/R=80/20.

La demande de brevet PCT WO2015092329A1 décrit ainsi un film PET enduit d'une couche de primaire d'accrochage et revêtu d'une couche d'aluminium obtenue par évaporation sous vide.
L'enduction du primaire d'accrochage est réalisée à l'aide d'un latex acrylique B (15 ou 20% d'extrait sec) réticulé avec un réticulant Cymel 303 LF de chez Cytec Industries Inc. Ce latex B commercialisé sous le nom BT-67 par la société DSM, comprend des particules de polymères acrylique(s) et/ou méthacrylique et présente un taux de gel d'au moins 50% en poids par rapport au poids total de polymère(s) acrylique(s) et/ou méthacrylique(s).
Le primaire d'accrochage obtenu à partir du latex B, selon des rapports extrait sec latex/réticulant sec (L/R), de F1:100/0, F2:80/20, F3:75/25, F4:70/30 permet d'obtenir des films composites avec des adhésions métal, en conditions sèches (température ambiante/hygrométrie < 50%), d'au moins 1500 gF/38mm, et de 360 gF/38mm en conditions humides, pour F4, dans un test d'adhésion TA est mesuré selon les recommandations AIMCAL TP- 105-92 (Metallizing Technical Référence éditée par Association of Industrial Metallizers, Coaters and Laminators).
L'effet barrière vis-à-vis de l'O2 est donnée par une PO2 (50% HR 23°C en cc/$m^2$/j) minimale de 1,76 pour F4.
L'ajout de 5 et de 10 % de polyester sulfoné aux primaires d'accrochage F2, F3, F4 conduit à des formulations F5 et F6, F7 et F8, F9 et F10, respectivement.
F6 permet d'obtenir des films composites avec des adhésions métal d'au moins 1500 gF/38mm, en conditions sèches, et de 1400 gF/38mm en conditions humides.
L'effet barrière vis-à-vis de l'O2 est donnée par une PO2 (50% HR 23°C en cc/$m^2$/j) minimale de 0,86 pour F6.

## OBJECTIFS DE L'INVENTION

Dans ce contexte, l'invention vise à atteindre au moins l'un des objectifs essentiels énumérés ci-après:

i améliorer encore, notamment, les spécifications suivantes du cahier des charges attendu pour les films composites polyester/primaire/revêtement métallique, à savoir :

- Adhérence du revêtement métallique, maintenue après traitement thermique de l'emballage (stratifié comprenant un film composite PET enduit métallisé et un film polyoléfine : polyéthylène ou polypropylène);
- Adhérence du revêtement maintenue en condition humide : Adhésion Métal Humide supérieur ou égale à 500 gF/38mm;
- Barrière au gaz du film composite PET enduit métallisé : Perméabilité à l'oxygène (23°C, 50% humidité relative) inférieure ou égale à 0,8 cc/m2/J - Perméabilité à la vapeur d'eau (38°C, 90% humidité relative) inférieure ou égale à 0,3 g/m2/J;

ii fournir un nouveau film composite comprenant un support polymère, de préférence polyester, au moins un revêtement adhérant sur au moins l'une des faces du support, et au moins une couche de primaire d'accrochage réticulé entre le support et le revêtement; ledit film ayant des propriétés barrière vis-à-vis des gaz améliorées tout comme l'adhérence du revêtement sur le support;
iii fournir un nouveau film composite tel que défini dans l'objectif ci-dessus et dans lequel est intervenu une réticulation interfaciale par l'entremise du primaire d'accrochage, de manière à favoriser l'adhérence entre des couches de matériaux de nature différente (par exemple polyester et métal) et améliorer les propriétés barrière au gaz du composite ;
iv fournir un nouveau film composite formé par un support (par exemple polyester) enduit d'au moins une couche de primaire d'accrochage et revêtu d'au moins une couche de métal et/ou d'oxyde de métal, ou d'au moins une couche d'encre, ou d'une couche d'adhésif;
v fournir un nouveau film composite polyester satisfaisant au moins l'un des objectifs ci-dessus et insensible à l'eau;
vi fournir un nouveau procédé d'enduction d'un support, de préférence un film polyester, avec une couche primaire

d'accrochage permettant d'obtenir des propriétés d'adhérence entre le support et le revêtement final nettement accrues;

vii fournir une nouvelle composition de primaire d'accrochage à enduire, qui soit universelle au regard des supports et des revêtements à solidariser, et qui soit en outre performante en termes d'amélioration des propriétés d'adhésion et des propriétés barrière au gaz des films composites réalisés au moyen de ce primaire d'accrochage;

viii fournir un nouveau procédé de fabrication, en ligne ou en reprise de préférence en ligne, d'un film composite comprenant un support polymère, de préférence polyester, au moins un revêtement adhérant sur au moins l'une des faces du support, et au moins une couche de primaire d'accrochage réticulé entre le support et le revêtement; ledit film ayant des propriétés barrière vis-à-vis des gaz améliorées tout comme l'adhérence du revêtement sur le support;

ix proposer de nouvelles utilisations d'un film composite formé par un support (par exemple polyester) enduit d'au moins une couche de primaire d'accrochage et revêtu d'au moins une couche de métal et/ou d'oxyde de métal, ou d'au moins une couche d'encre, ou d'une couche d'adhésif, ces nouvelles utilisations étant notamment l'emballage, de préférence d'aliments, la décoration, l'impression et/ou la protection de supports divers.

## BREVE DESCRIPTION DE L'INVENTION

Cherchant à perfectionner l'existant, les inventeurs ont eu le mérite de mettre au point un nouveau primaire d'accrochage permettant d'atteindre les objectifs susvisés, parmi d'autres.

Ainsi, selon un premier aspect, l'invention a pour objet un film composite comprenant un support polymère, de préférence polyester, au moins un revêtement adhérant sur au moins l'une des faces du support, et au moins une couche de primaire d'accrochage réticulé entre le support et le revêtement ;
ledit film ayant des propriétés barrière vis-à-vis des gaz améliorées tout comme l'adhérence du revêtement sur le support, caractérisé en ce que

- ce primaire comprend au moins un polymère P1 acrylique et/ou méthacrylique, au moins un polymère P2 acrylique et/ou méthacrylique différent de P1, au moins un réticulant, et, de préférence, au moins un polyester soluble ou dispersible dans l'eau ;
- P1 ayant un taux de gel TG1 supérieur ou égal à -en % en poids sec et dans un ordre croissant de préférence- 70; 80 ; 85, par rapport au poids total sec de P1 ;
- P2 ayant un taux de gel TG2, inférieur ou égal à TG1 et inférieur ou égal à - en % en poids sec et dans un ordre croissant de préférence- 20; 40 ; 70, en poids, par rapport au poids total sec de P2 ;
- P1 ayant un taux d'acide faible libre greffé en surface supérieur ou égal à - en microéquivalent par gramme de polymère et dans un ordre croissant de préférence-0,8 ; 0,9 ; 1,0 ;

la concentration massique de P2 est inférieure ou égale à - en % en poids sur sec par rapport à la masse totale sèche de P1 et P2 et donnée ci-après dans un ordre croissant de préférence, 60, 50, 40.

L'invention procède donc d'un nouvel assemblage de polymères acryliques et/méthacryliques, ayant des taux de gel différents et situés dans des domaines opposés, ce nouvel assemblage entraînant, de manière surprenante inattendue, des améliorations significatives et concomitantes de l'adhérence métal en condition humide et des propriétés barrières aux gaz du film composite.

Selon un deuxième aspect, l'invention a pour objet un procédé de fabrication, en ligne ou en reprise, de préférence en ligne, du film selon l'invention, ce procédé étant caractérisé par la mise en oeuvre des étapes suivantes :

-a- on met en oeuvre un support tel que défini dans le présent exposé ;
-b- éventuellement, on effectue un traitement physique de surface dudit support ;
-c- éventuellement, on étire le film dans une direction donnée ou dans 2 directions perpendiculaires ;
-d- on enduit au moins une face dudit support avec une composition d'enduction permettant d'obtenir au moins une couche de primaire d'accrochage réticulé telle que définie dans le présent exposé;
-e- on fait réticuler l'enduit pour obtenir la couche de primaire d'accrochage ;
-f- éventuellement, on étire le film dans une direction donnée, cette dernière étant perpendiculaire à celle visée à l'étape c dans le cas où cette étape est mise en oeuvre avec un étirage mono-directionnel, ou dans 2 directions perpendiculaires;
-g- éventuellement on soumet le support enduit et étiré à une thermofixation ;
-h- on applique sur la couche de primaire d'accrochage réticulée, un revêtement tel que défini dans le présent exposé ;
-i- on soumet l'ensemble composite support/primaire/revêtement à un mûrissement en température, avantageusement pendant 1 à 50 jours, de préférence, 5 à 20 jours, et, plus préférentiellement encore, de 8 à 15 jours, à une température comprise entre 10 et 120°C, de préférence entre 30 et 90°C, et, plus préférentiellement encore, entre

50 et 80°C, à la pression atmosphérique ambiante.

Selon un troisième aspect, l'invention concerne une composition de primaire d'accrochage à enduire, en particulier mise en oeuvre dans le procédé susvisé, caractérisée en ce qu'elle comprend :

→ un mélange d'au moins deux latex L1, L2 acryliques:

- ▪ L1 comprenant au moins un polymère P1 acrylique et/ou méthacrylique; P1 ayant un taux de gel TG1 supérieur ou égal à -en % en poids sec et dans un ordre croissant de préférence- 70; 80 ; 85, par rapport au poids total sec de P1;
- ▪ L2 comprenant au moins un polymère P2 acrylique et/ou méthacrylique différent de P1; P2 ayant un taux de gel TG2, inférieur ou égal à TG1 et inférieur ou égal à -en % en poids sec et dans un ordre croissant de préférence-20 ; 40 ; 70, en poids, par rapport au poids total sec de P2 ;
- ▪ P1 ayant un taux d'acide faible libre greffé en surface supérieur ou égal à -en microéquivalent par gramme de polymère et dans un ordre croissant de préférence- 0,8; 0,9 ; 1,0 ;
- ▪ la concentration massique de P2 est inférieure ou égale à -en % en poids sur sec par rapport à la masse totale sèche de P1 et P2 et donnée ci-après dans un ordre croissant de préférence, 60, 50, 40;

→ au moins un réticulant ;
→ de préférence, au moins un polyester soluble ou dispersible dans l'eau.
→ et de préférence de l'eau.

Selon un quatrième aspect, l'invention se rapporte à un article choisi dans le groupe constitué par des emballages alimentaires et non-alimentaires, les films ou feuilles pour la protection de support et les films ou feuilles pour l'isolation thermique et la protection contre l'humidité dans le secteur du bâtiment, caractérisé en ce qu'il comprend au moins un film selon l'invention ou tel qu'obtenu à l'issue du procédé selon l'invention.

## DESCRIPTION DETAILLEE DE L'INVENTION

*Définitions*

Dans tout le présent exposé, tout singulier désigne indifféremment un singulier ou un pluriel.
Les définitions données ci-après à titre d'exemples, peuvent servir à l'interprétation du présent exposé :

- *"polymère"* désigne aussi bien un homopolymère qu'un copolymère statistique ou séquencé
- *"environ"* ou "sensiblement" à plus ou moins 10 % près, voire plus ou moins pour 5% près, rapporté à l'unité de mesure utilisée.

*FILM COMPOSITE*

Le film composite comprend:

- Un support constitué d'au moins deux couches de polymère, de préférence un polyester;
- Un intermédiaire formé d'au moins une couche de primaire d'accrochage réticulé présente sur au moins l'une des faces du support;
- Un revêtement, mono ou multicouche, comprenant de préférence au moins un métal, au moins un oxyde métallique, de l'oxide de silicium, au moins une encre et/ou au moins un adhésif.

Le support

Le support est un support solide, de préférence flexible. Il peut s'agir notamment d'un film polymère. On utilise tout particulièrement un film polyester.
Ainsi, le film selon l'invention est caractérisé par au moins l'une des caractéristiques suivantes :

→ le support en polyester est étiré biaxialement ;
→ le support en polyester est choisi parmi les polytéréphtalates ou des polynaphtalène-dicarboxylates d'alkylènediol, de préférence parmi le polytéréphtalate d'éthylèneglycol ou de butanediol-1,4 et les copolyesters comportant au moins 80 % en moles de motifs téréphtalate d'éthylèneglycol ;

→ le support en polyester a une épaisseur inférieure ou égale à 150 μm (micromètres), de façon plus préférée comprise entre 4 μm et 100 μm, de façon plus préférée comprise entre 4 μm et 40 μm, et de façon encore plus préférée comprise entre 4 μm et 15 μm ;
→ le support en polyester est constitué d'au moins deux couches présentant des propriétés de surface différentes ;
→ le support en polyester dissymétrique est réalisé selon la technique de la coextrusion d'au moins deux couches de polyester comportant chacune des taux de charges différents et le cas échéant des charges différentes, le polyester utilisé étant préférentiellement le même pour les deux couches coextrudées et la couche de polyester devant recevoir la couche de primaire étant la plus faiblement chargée ;
→ le support en polyester comprend en partie du polyester recyclé issu du support lui-même et/ou du support enduit d'un primaire d'accrochage réticulé tel que défini dans le présent exposé et/ou du support enduit du susdit primaire et revêtu du revêtement tel que défini dans le présent exposé.

Le polyester est avantageusement un produit de polycondensation d'un ou plusieurs acides dicarboxyliques aromatiques (acide téréphtalique, acide isophtalique par exemple) ou de leurs dérivés (halogénures, esters) avec au moins un alcoylèneglycol (éthylèneglycol ; propane-1,3-diol; butane-1,4-diol par exemple). De préférence, il s'agit de polyesters dérivés de l'acide téréphtalique ou d'un mélange d'acide téréphtalique et d'un autre acide aromatique dicarboxylique (acide isophtalique par exemple), la teneur du mélange en acide téréphtalique étant suffisante pour que le polymère soit essentiellement cristallin après étirage.
De préférence, on utilise dans la présente invention des polyesters linéaires filmogènes, cristallisables par orientation et obtenus de façon usuelle à partir d'un ou plusieurs acides aromatiques dicarboxyliques ou leurs dérivés (esters d'alcools aliphatiques inférieurs ou halogénures par exemple) et d'un ou plusieurs diols (glycols) aliphatiques.
Le polyester constituant le film de base peut être choisi parmi les polyesters auxquels on fait appel habituellement pour l'obtention de films semi-cristallins bi-orientés. Comme exemples d'acides aromatiques, on peut citer les acides phtaliques, téréphtaliques, isophtaliques, naphtalène-2,5-dicarboxyliques, et naphtalène-2,6-dicarboxyliques. Ces acides peuvent être associés à une quantité mineure d'un ou plusieurs acides dicarboxyliques aliphatiques ou cycloaliphatiques, tels que les acides adipiques, azélaïques, tétra- ou hexahydrotéréphtaliques. Comme exemples non limitatifs de diols aliphatiques, on peut citer l'éthylèneglycol, le propane-1,3-diol et le butane-1,4-diol. Ces diols peuvent être associés à une quantité mineure d'un ou plusieurs diols aliphatiques plus condensés en carbone (néopentylglycol par exemple) ou cycloaliphatiques (cyclohexanedimethanol par exemple).
Préférentiellement, les polyesters filmogènes cristallisables sont des polytéréphtalates ou des polynaphtalènedicarboxylates d'alkylènediol et, en particulier, le polytéréphtalate d'éthylène-glycol (PET) ou de butane-1,4-diol ou des copolyesters comportant au moins 80% en moles de motifs téréphtalate d'éthylèneglycol. Avantageusement, le polyester est un polytéréphtalate d'éthylèneglycol dont la viscosité intrinsèque mesurée à 25°C dans l'ortho-chlorophénol est comprise entre 0,6 dl/g et 0,75 dl/g.
Les films de polyester bi-orientés sont, par exemple :

- soit constitués de polyéthylène téréphtalate ;
- soit constitués de mélanges ou non de copolyesters polyéthylène téréphtalate contenant des unités cyclohexyldiméthylol à la place des unités éthylène ;
- soit composés de mélanges ou non de copolyesters polyéthylène téréphtalate avec une partie de polyester présentant des unités isophtalate ;
- soit constitués de plusieurs couches de polyesters de natures chimiques différentes, comme décrit précédemment, obtenus par coextrusion.

Des exemples spécifiques de polyesters aromatiques sont notamment le polyéthylène téréphtalate (PET), le polyéthylène isophtalate, le polybutylène téréphtalate, le poly-(diméthyl-1,4-cyclohexylènetéréphtalate) et le polyéthylène-2,6-naphtalènedicarboxylate. Le polyester aromatique peut être un copolymère de ces polymères ou un mélange de ces polymères avec une petite quantité d'autres résines, par exemple et sans être limitatif le polybutylène téréphtalate (PBT). Parmi ces polyesters, le polyéthylène téréphtalate (PET) et le polyéthylène-2,6-naphtalènedicarboxylate (PEN) sont particulièrement préférés car ils offrent un bon équilibre entre les propriétés physiques, les propriétés mécaniques et les propriétés optiques. De préférence, la teneur en acide téréphtalique, exprimées en moles pour cent moles d'acide est d'au moins 80. Dans les modes de réalisation préférés de l'invention, le support est un film de polyéthylène téréphtalate PET (par exemple à orientation bi-axiale) ou le polyéthylène naphtalate (PEN) ou le polybutylène téréphtalate (PBT).
Les films support mis en oeuvre dans la présente invention peuvent être orientés ou non. De préférence, ils sont orientés. Avantageusement, le film polyester mis en oeuvre est à orientation bi-axiale.
Le support selon l'invention peut être monocouche, bi-couches ou tri-couches. Chacune des couches est composée de polyesters tels que définis ci-dessus, de préférence du PET, PBT ou PEN, et/ou des copolyesters décrits ci-dessus et/ou des mélanges de polyesters/copolyesters. La ou les couches peuvent être selon une structure M, MN,

MNM ou MNO où M est différent de N et O, N est différente de O. La couche principale peut être encadrée par une ou deux couches identiques ou non en terme d'épaisseur et/ou de composition. Dans cette structure, le support peut être symétrique ou dissymétrique. Une de ces couches du support destinée à être revêtue par la composition d'enduction décrite ci-dessus présente une rugosité moyenne Rz inferieur ou égale à 0.25 micromètre et une rugosité Ra (écart moyen arithmétique du profil) inferieur ou égale à 0, 028 micromètre. L'autre face du support doit présenter des propriétés de glissant suffisantes pour permettre une manipulation facile du film, notamment son enroulement sur les différents rouleaux guides lors des étirages ou son enroulement sur lui-même. Ces propriétés de glissant peuvent être apportées de différentes manières. Une des façons les plus courantes de procéder consiste à incorporer dans le polyester, avant la transformation en film, des charges solides inertes. Ces charges sont généralement des charges minérales, telles que par exemple la silice, le dioxyde de titane, dioxyde de zirconium, l'alumine, les mélanges silice/alumine, les silicates, le carbonate de calcium, le sulfate de baryum. Ces charges peuvent également être constituées de particules de polymères.

Le diamètre médian en volume des charges est en général compris entre 1 et 10 micromètres et de préférences entre 1 et 5 micromètre, plus préférentiellement entre 2-4 micromètres.

La teneur en charge du film est habituellement comprise entre 0,02% et 1% en poids par rapport au poids du polyester.

Une variante de la présente invention consiste à avoir un film polyester de base présentant des propriétés de surface, notamment des rugosités, différentes sur chacune de ses deux faces. Les rugosités moyennes Rz différentes peuvent par exemple être égale ou supérieur à 0.35 micromètre sur la face dorsale du film, et inferieur ou égale à 0,25 micromètre sur la face du film de base destinée à être enduite par la composition décrite ci-dessus.

Ainsi le film de base en polyester peut être constitué de deux couches présentant des propriétés de surface, notamment des rugosités, différentes.

Le support mis en oeuvre pour la présente invention est de préférence un film en polyester, de préférence encore un film en polyéthylène téréphtalate (PET), dont l'épaisseur est de façon préférée inférieure ou égale à 150 μm (micromètres), de façon plus préférée comprise entre 4 μm et 100 μm, de façon plus préférée comprise entre 4 μm et 40 μm, et de façon encore plus préférée comprise entre 4 μm et 15 μm.

Le support selon l'invention peut comprendre avantageusement en partie du produit recyclé issu du support lui-même et/ou du support enduit et/ou du support enduit et revêtu. Le support peut contenir jusqu'à 80% en poids de ce produit recyclé par rapport au poids total de support final. Ceci permet de réduire les coûts de production du film et d'éviter de pertes économiques dues à la non-utilisation des chutes de support, de support enduit et/ou de support enduit et revêtu.

Le primaire d'accrochage

• P1 - P2

Ce primaire d'accrochage, de préférence enduit et réticulé, sur le support avant l'application du revêtement, dans le film composite selon l'invention comprend au moins un polymère P1 acrylique et/ou méthacrylique, au moins un polymère P2 acrylique et/ou méthacrylique différent de P1, au moins un réticulant, et, de préférence, au moins un polyester soluble ou dispersible dans l'eau.

P1 & P2 sont chacun un polymère acrylique et/ou méthacrylique formés de monomères acryliques et/ou méthacryliques. Ces monomères peuvent être de différente nature: hydrophobes, hydrophiles ou partiellement hydrophiles.

De préférence, P1 ou P2 comprend :

i. au moins un monomère partiellement hydrophile d'acrylate d'alkyle, de méthacrylate d'alkyle ou un mélange des deux, la portion alkyle de ces monomères contenant 1 ou 2 atomes de carbone ;
ii. éventuellement au moins un monomère hydrophobe d'acrylate d'alkyle, de méthacrylate d'alkyle ou un mélange des deux, la portion alkyle de ces monomères étant linéaire ou branchée et contenant au moins 4 atomes de carbone ;
iii. au moins un monomère hydrophile.

Les monomères partiellement hydrophiles peuvent être des acrylates d'alkyle ou les méthacrylates d'alkyle où la portion alkyle à 1 ou 2 atomes de carbone. Les monomères partiellement hydrophiles préférés sont l'acrylate de méthyle, le méthacrylate de méthyle, l'acrylate d'éthyle, et leurs mélanges, le méthacrylate de méthyle et l'acrylate d'éthyle étant les plus préférés.

La quantité de monomères partiellement hydrophiles basée sur la masse totale de monomère est de façon préférée d'au moins 10 % en poids, de façon plus préférée d'au moins 20% en poids, de façon plus préférée comprise entre 20% et 30% en poids.

Les monomères hydrophobes peuvent être des acrylates d'alkyle ou les méthacrylates d'alkyle où la portion

alkyle est linéaire ou branchée et contient au moins 4 atomes de carbone. La portion alkyle peut être choisie dans le groupe constitué par n-butyle, iso-butyle, t-butyle, n-pentyle, n-hexyle, éthyl-2-hexyle, décyle, dodécyle, et octadécyle. Les monomères hydrophobes préférés sont l'acrylate de butyle, le méthacrylate de butyle et leurs mélanges.

La quantité de monomères hydrophobes basée sur la masse totale de monomère est de façon préférée d'au moins 30% en poids, de façon plus préférée d'au moins 50% en poids. Les monomères hydrophiles peuvent être des monomères copolymérisables avec les monomères d'acrylate d'alkyle ou de méthacrylate d'alkyle et qui sont solubles dans l'eau. Les monomères hydrophiles peuvent être sélectionnés parmi les acides mono-carboxyliques mono-oléfiniques, les acides di-carboxyliques mono-oléfiniques et leurs mélanges. Des exemples de monomères hydrophiles incluent, mais ne sont pas limités à, l'acide acrylique, l'acide méthacrylique, l'acide fumarique, l'acide maléique, l'acide itaconique, l'acide crotonique, un oligomère d'acide acrylique et leurs mélanges. Les acides préférés sont l'acide acrylique, l'acide méthacrylique et leurs mélanges.

La quantité de monomères hydrophiles basée sur la masse totale de monomères est d'au moins 5% en poids, de préférence d'au moins 10% en poids.

La masse totale de monomères hydrophobes, hydrophiles et partiellement hydrophiles décrits ci-dessus représente de façon préférée au moins 60%, de façon plus préférée au moins 75%, de façon plus préférée au moins 80%, et de façon encore plus préférée au moins 90% de la masse totale des monomères constituant le polymère acrylique et/ou méthacrylique selon l'invention. Le pourcentage massique de monomères différents de ces monomères hydrophobes, hydrophiles et partiellement hydrophiles est de préférence inférieur à 20%, de façon plus préférée inférieur à 10%, et de façon encore plus préférée inférieur à 5%, par rapport à la masse totale des monomères. De préférence, le polymère acrylique et/ou méthacrylique selon l'invention est constitué ou essentiellement constitué par les monomères hydrophobes, hydrophiles et partiellement hydrophiles décrits ci-dessus.

Avantageusement, P1 ou P2 peut ne pas contenir de monomères non compatibles avec des applications alimentaires, par exemple des monomères choisis dans le groupe constitué par les monomères de type acrylamide, de type acide ou ester di-carboxylique aromatique (notamment acide phtalique, isophtalique et téréphtalique et les esters correspondants), de type styrène, de type alkylphénol ou de type butadiène.

De préférence, P1 ou P2 selon l'invention comprend :

i. au moins 20% de monomère(s) partiellement hydrophile(s) choisi(s) parmi l'acrylate de méthyle, le méthacrylate de méthyle, l'acrylate d'éthyle, et leurs mélanges.
ii. au moins 30% d'un monomère hydrophobe d'acrylate d'alkyle, de méthacrylate d'alkyle ou un mélange des deux, la portion alkyle de ces monomères étant linéaire ou branchée et contenant au moins 4 atomes de carbone ;
iii. au moins 5% de monomère(s) hydrophile(s) choisi(s) parmi l'acide acrylique, l'acide méthacrylique et leurs mélanges ;

Par exemple, la composition de P1 ou P2 peut être (% en poids/poids sur sec):

- 25 à 80 de méthacrylate de méthyle,
- 20 à 60 d'acrylate d'éthyle,
- 5 à 20 d'acide méthacrylique,
- 0,1 à 10 d'acide crotonique,
- 1 à 10 d'acétate de vinyle.

Selon un mode de réalisation préférée de l'invention, P1 et P2 ont la même composition monomérique qualitative et quantitative.

En outre, P1 & P2 ont respectivement un taux de gel TG1 & TG2, avec

- TG2 inférieur ou égal à TG1.
- TG1 supérieur ou égal à -en % en poids sec et dans un ordre croissant de préférence- 70; 80 ; 85, par rapport au poids total sec de P1
- TG2 inférieur ou égal à - en % en poids sec et dans un ordre croissant de préférence- 20; 40 ; 70, en poids, par rapport au poids total sec de P2.

Le taux de gel d'un polymère représente le taux d'insoluble du polymère, et il permet donc de caractériser le niveau de réticulation du polymère.

P1 & P2 se présentent de préférence sous la forme de particules de polymère, dont le diamètre moyen est par exemple inférieur ou égal à 100 nm. Par conséquent, la surface particulaire du polymère est très haute.

Avantageusement, P1 a un taux d'acide faible libre greffé en surface supérieur ou égal à - en microéquivalent par gramme de polymère et dans un ordre croissant de préférence- 0,8 ; 0,9 ; 1,0 ; par exemple compris entre 1 et 2.

Le taux d'acide libre greffé en surface de P2 est lui aussi supérieur ou égal à - en microéquivalent par gramme de polymère et dans un ordre croissant de préférence- 0,8 ; 0,9 ; 1,0 ; par exemple compris entre 1 et 2.

Selon une modalité remarquable de l'invention, P1 & P2 ont des taux d'acide faible libre greffé en surface différents.

La concentration massique de P2 dans le primaire d'accrochage réticulé, est préférablement inférieure ou égale à - en % en poids sur sec par rapport à la masse totale sèche de P1 et P2 et donnée ci-après dans un ordre croissant de préférence, 60, 50, 40.

Avantageusement, la (ou les) couche(s) de primaire d'accrochage réticulée(s) forme(nt) une interface dont l'épaisseur est inférieure ou égale à 200 nm (nanomètres), de façon plus préférée comprise entre 40 nm et 120 nm, de façon plus préférée comprise entre 50 nm et 100 nm, et de façon encore plus préférée comprise entre 60 nm et 90 nm.

• Réticulant

Le primaire d'accrochage réticulé comprend en outre au moins un réticulant. Par "réticulant", on entend un additif ajouté dans au polymère acrylique et/ou méthacrylique et qui génère une réaction de réticulation entre les chaînes polymères, notamment grâce les fonctions hydroxy et carboxyliques du polymère acrylique et/ou méthacrylique. Ce réticulant génère ainsi la formation d'un ou plusieurs réseaux tridimensionnels, uniforme(s) et continu(s).

De préférence, le réticulant comporte au moins une résine, de préférence au moins une résine à base d'amine, et, plus préférentiellement encore au moins une résine mélamine-aldéhyde, et, de manière encore plus préférée, au moins une résine benzoguanamine-aldéhyde; et/ou au moins une résine dérivée des résines susévoquées.

Les résines à base d'amine sont des mélanges complexes, possédant différents sites fonctionnels, et ils sont classiquement synthétisés par condensation de formaldéhyde avec une amine et l'alkylation ultérieure des groupes méthylol résultants avec un alcool. Certains réticulants utilisés sont des résines mélamine-aldéhyde de formule (I) ou des résines benzoguanamine-aldéhyde de formule (II) :

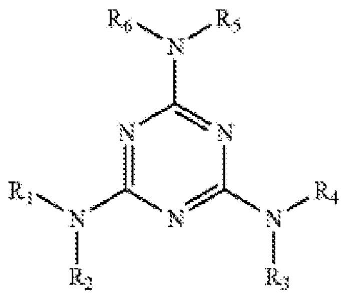
(I)

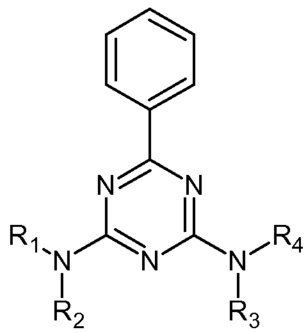
(II)

où les groupes $R_1$ à $R_6$ sont choisis indépendamment les uns des autres parmi -H, $-CH_2OH$ et $-CH_2OR_7$, $R_7$ étant un groupe alkyle en $C_1$ à $C_5$.

Les résines à base d'amine plus préférentiellement utilisées dans la présente invention sont Cymel 1123® (une résine méthylée et éthylée de benzoguanamine-formaldéhyde, 98% minimum de solides) et Cymel 303LF® (une résine méthylée de mélamine-formaldéhyde ayant des groupes réactifs alcoxy, 98% minimum de solides), dont les structures chimiques respectives sont données ci-dessous :

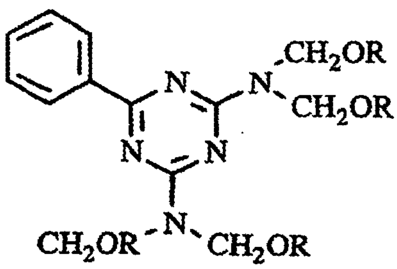
Cymel 1123

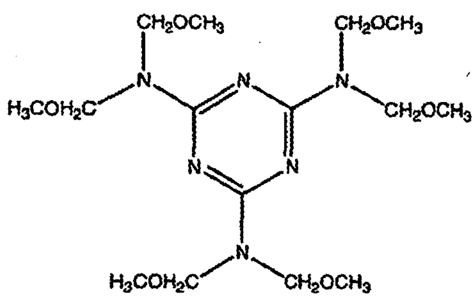
Cymel 303

(dans laquelle R peut être $CH_3$ ou $C_2H_5$)

Ces résines sont commercialisées par Allnex.

Les meilleures performances sont obtenues avec :

- des réticulants choisis parmi les résines à base d'amine partiellement méthylée ou mieux encore fortement méthylée, et/ou
- des réticulants permettant un durcissement rapide à une température supérieure à 80°C, et/ou
- des réticulants ayant une stabilité au stockage à long terme, de préférence supérieure à 48 heures, après son mélange avec le polymère acrylique en milieu aqueux.

Les groupes fonctionnels du réticulant et les groupes carboxyl, hydroxyl, amide et/ou méthylol disponibles sur les polymères acryliques et/ou méthacryliques peuvent réagir en présence d'un catalyseur acide. Le catalyseur acide peut être bloqué ou non. Comme catalyseur acide adapté à présente invention, on peut citer, sans se limiter à ceux-ci, les acides minéraux, l'acide p-toluène sulfonique, l'acide dinonylnaphtalène disulfonique, l'acide dodécylbenzènesulfonique, l'acide oxalique, l'acide maléique, l'acide hexamique, l'acide phosphorique, l'acide phtalique, l'acide acrylique copolymérisé dans le polymère. Le catalyseur le plus couramment utilisé est l'acide para-toluène sulfonique. La quantité optimale de catalyseur est fonction de l'acidité du polymère acrylique et/ou méthacrylique et de la température de durcissement ciblées.

Les proportions massiques sur sec (poids/poids) de P1 ou de P2 par rapport au réticulant sont comprises entre 95/5 et 50/50, de façon plus préférée entre 90/10 et 65/45, et de façon encore plus préférée entre 80/20 et 60/40.

• Polyester soluble ou dispersible dans l'eau facultatif

En outre, le primaire d'accrochage du film composite selon l'invention comprend au moins un polyester soluble ou dispersible dans l'eau. Par "polymère dispersible dans l'eau", on entend dans la présente invention un polymère formant avec l'eau des dispersions stables homogènes.

Les polyesters à groupes sulfonyloxy sont particulièrement privilégiés dans le cadre de l'invention. Ces groupes sont définis comme les groupes de formule générale

$$-SO_3H$$

ou

$$(-SO_3^-)_nM^{n+}$$

dans laquelle n vaut 1 ou 2 et M représente un ion alcalin, un ion alcalino-terreux ou un ammonium quaternaire.

Le polyester à groupes sulfonyloxy peut être obtenu par polycondensation d'un ou plusieurs acide aromatique dicarboxylique avec un ou plusieurs diols aliphatiques et au moins un composé difonctionnel comprenant au moins un groupe sulfonyloxy.

Parmi les acides aromatiques dicarboxyliques utilisables, on peut citer l'acide téréphtalique, l'acide isophtalique, l'acide phtalique, l'acide naphtalène-1,4-dicarboxylique, l'acide oxy-4,4'-dibenzoïque, la bis(hydroxycarbonyl-4-phényl)sulfone et la di-hydroxycarbonyl-4,4'-benzophénone. Ces acides peuvent être utilisés seuls ou en mélanges. L'acide aromatique dicarboxylique est de préférence choisi parmi l'acide téréphtalique, l'acide isophtalique et leurs mélanges. Des acides dicarboxyliques aliphatiques comportant de 3 à 15 atomes de carbone peuvent être associés aux acides aromatiques dicarboxyliques, par exemple l'acide adipique, l'acide subérique, l'acide sébacique, l'acide succinique et l'acide dodécanedioïque.

Parmi les diols utilisables, on peut citer l'éthylèneglycol, le butane-1,4-diol, le butane-1,3-diol, le propane-1,3-diol, le propane-1,2-diol, le 2,2-diméthylpropane-1,3-diol (ou néopentylglycol), le pentane-1,5-diol, l'hexane-1,6-diol, le cyclohexanediméthanol, le diéthylèneglycol, le triéthylèneglycol, le tétraéthylèneglycol, le pentamétylèneglycol, l'hexamétylèneglycol ou le décamétylèneglycol. De préférence, le diol est choisi parmi l'éthylèneglycol et ses oligomères, seuls ou en mélange entre eux et/ou avec d'autres diols. Les oligomères de l'éthylèneglycol sont représentés par la formule $HO-(CH_2-CH_2-O-)_nH$ dans laquelle n est un nombre entier compris entre 2 et 10.

Enfin, le composé difonctionnel comprenant au moins un groupe sulfonyloxy peut être choisi parmi les composés comprenant au moins un groupe sulfonyloxy tel que défini ci-dessus et comprenant au moins deux groupes fonctionnels susceptibles de réagir avec les diacides et/ou les diols par polycondensation. On peut citer par exemple les sels de métaux alcalins d'acides aromatiques dicarboxyliques à groupes sulfonyloxy tels que ceux des acides sulfotéréphtaliques, sulfoisophtaliques, sulfophtaliques, 4-hydroxysulfonyl-naphtalène-2,7-dicarboxyliques ou à leurs dérivés et en

particulier à leurs esters.

Par exemple, un polyester à groupes sulfonyloxy solubles ou dispersables dans l'eau selon l'invention peut répondre à la formule chimique suivante :

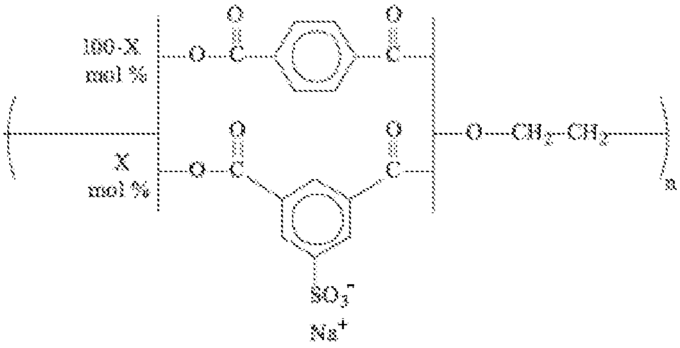

dans laquelle X vaut 20.

Des polyesters à groupes sulfonyloxy solubles ou dispersibles dans l'eau ont été décrit dans l'art antérieur, par exemple dans la demande de brevet EP0260203B. En outre, des polyesters pouvant être utilisés dans la présente invention sont disponibles commercialement.

S'agissant de ces polyesters facultatifs à groupes sulfonyloxy solubles ou dispersibles dans l'eau, le film selon l'invention est caractérisé par l'une et/ou l'autre des caractéristiques suivantes :

i le polyester soluble ou dispersible dans l'eau est porteur de groupes sulfonyloxy et il est de préférence choisi dans le groupe comprenant -ou mieux encore constitué par- les copolyesters dérivés d'au moins un acide aromatique dicarboxylique et d'au moins un diol aliphatique et comportant une pluralité de groupes sulfonyloxy de formule générale (I) :

$$-(-S03^{-})_nM \qquad (I)$$

dans laquelle n est égal à 1 ou 2, M représente un atome d'hydrogène, un métal alcalin ou alcalino-terreux, un cation ammonium ou un cation ammonium quaternaire ;

ii la teneur en polyester soluble ou dispersible dans l'eau, est comprise entre 2% et 30% en poids, de façon plus préférée entre 5% et 20% en poids, et de façon encore plus préférée entre 8% et 12% en poids sec, par rapport au poids sec de polymère acrylique et/ou méthacrylique.

Le revêtement

Ce revêtement peut être de différents types, par exemple : métal, oxyde de métal, sulfure de métal, alliage, oxyde de silicium, encre, ou adhésif, et leurs combinaisons, dans une ou plusieurs couches.

Conformément à l'invention et au regard du revêtement du film composite, ce dernier est caractérisé par au moins l'une des caractéristiques suivantes :

→ le revêtement comporte au moins une couche métallique composée d'au moins un métal et/ou au moins un oxyde métallique et/ou un oxyde de silicium, le métal étant de préférence choisi parmi l'aluminium, le cuivre, le chrome, le nickel, l'argent ;
l'aluminium étant particulièrement préféré ;
→ l'épaisseur du revêtement se situe entre 0,01 et 0,06 micron.

Film muri thermiquement

Suivant une caractéristique préférée de l'invention, le film composite a muri pendant 1 à 50 jours, de préférence, 5 à 20 jours, et, plus préférentiellement encore, de 8 à 15 jours, à une température comprise entre 10 et 120°C, de préférence entre 30 et 90°C, et, plus préférentiellement encore, entre 50 et 80°C, à la pression atmosphérique ambiante.

Rugosités de surface spécifiques

Suivant une autre caractéristique remarquable de l'invention, le film composite est caractérisé en ce que la rugosité moyenne Rz du support, sur sa(ses) face(s) porteuse(s) d'un revêtement, est inférieure ou égale à 0,40 microns et en ce que cette face ne comporte en moyenne pas plus de 20 pics ayant une hauteur égale ou supérieure à 1 micron et pas plus de 150 pics ayant une hauteur comprise entre 0,4 et 1 microns, par millimètre carré, lorsque l'épaisseur de la couche de primaire est inférieure à 0,6 microns.

La rugosité de la(les) face(s) du support revêtu d'au moins une couche de primaire d'accrochage réticulé est également un paramètre important est avantageux de l'invention. Ainsi, cette rugosité est telle que la(les) face(s) du support revêtu du primaire, ne comporte en moyenne pas plus de 20 pics ayant une hauteur égale ou supérieure à 1 micron et pas plus de 100 pics ayant une hauteur comprise entre 0,4 et 1 micron, par millimètre carré.

Barrière aux gaz et adhésion

Il a été découvert que, de façon surprenante, le film composite selon l'invention, une fois muri en température (par exemple 10 jours à 60°C), présente à la fois de bonnes propriétés d'adhérence entre le support et le revêtement en conditions sèches et humides, mais aussi de très bonnes propriétés barrières, en particulier à l'oxygène et à la vapeur d'eau. Ces bonnes propriétés sont avantageusement maintenues dans des conditions de haute température et d'humidité.

Ainsi, le film composite selon l'invention présente-t-il au moins l'une des caractéristiques suivantes :

→ une perméabilité à l'oxygène, mesurée à 23 °C sous 0 % d'humidité relative, exprimée $cm^3/m^2/24$ h et donnée ci-après dans un ordre croissant de préférence, inférieure ou égale à 0,9 ; 0,8 ; 0,7 ; 0,6 ;
→ une perméabilité à la vapeur d'eau , mesurée à 38 °C sous 90 % d'humidité relative, exprimée en $g/m^2/24h$ et donnée ci-après dans un ordre croissant de préférence, inférieure ou égale à 0,5 ; 0,4 ; 0,3 ;
→ une adhésion en conditions sèches, mesurée dans un test TA, supérieure ou égale à -en gf/38mm et dans un ordre croissant de préférence, 1000 ; 1200 ; 1300.
→ une adhésion en conditions humides, mesurée dans un test TA, supérieure ou égale à -en gf/38mm et dans un ordre croissant de préférence, 300 ; 400 ; 500.

Le film composite selon l'invention a des propriétés barrières accrues, en particulier des propriétés barrières à l'oxygène. Grâce à la composition du primaire P1-P2, au réticulant, et, de préférence, à la faible rugosité du support enduit, la propriété barrière à l'oxygène du film composite atteint de façon surprenante des niveaux significativement bas.

Stratifié comprenant le film composite de l'invention

Dans une variante de réalisation, le film composite selon l'invention est caractérisé en ce qu'il est solidarisé avec au moins un autre film, choisi parmi les films selon l'invention, les plastiques (e.g. polyoléfines : polyéthylène, polypropylène...) les métaux et analogues, leurs oxydes, pour former un stratifié.

*FABRICATION DU FILM COMPOSITE*

Le procédé de fabrication, en ligne ou en reprise de préférence en ligne, en particulier du film selon l'invention comprend les étapes suivantes :

-a- on met en oeuvre un support tel que défini supra ;
-b- éventuellement, on effectue un traitement physique de surface dudit support ;
-c- éventuellement, on étire le film dans une direction donnée ou dans 2 directions perpendiculaires ;
-d- on enduit au moins une face dudit support avec une composition d'enduction permettant d'obtenir au moins une couche de primaire d'accrochage réticulé telle que définie dans le présent exposé ;
-e- on fait réticuler l'enduit pour obtenir la couche de primaire d'accrochage ;
-f- éventuellement, on étire le film dans une direction donnée, cette dernière étant perpendiculaire à celle visée à l'étape c dans le cas où cette étape est mise en oeuvre avec un étirage mono-directionnel, ou dans 2 directions perpendiculaires ;
-g- éventuellement on soumet le support enduit et étiré à une thermofixation;
-h- on applique sur la couche de primaire d'accrochage réticulée, un revêtement tel que défini dans le présent exposé.
-i- on soumet l'ensemble composite support/primaire/revêtement à un mûrissement en température, avantageusement pendant 1 à 50 jours, de préférence, 5 à 20 jours, et, plus préférentiellement encore, de 8 à 15 jours, à une

température comprise entre 10 et 120°C, de préférence entre 30 et 90°C, et, plus préférentiellement encore, entre 50 et 80°C, à la pression atmosphérique ambiante.

Etape (a)

Le support tel que décrit ci-dessus est de préférence un film polyester (e.g. PET).

Etape (b)

Pour améliorer encore les propriétés d'adhésion du revêtement sur le support enduit, le procédé peut comprendre une éventuelle étape (b) consistant à effectuer un traitement physique de surface dudit support. Ce traitement est réalisé avant l'enduction (étape d). Tout ou partie de la surface du support peut être traitée. Le traitement physique peut être choisi parmi un traitement par une décharge électrique de type corona et un traitement de type plasma. Ledit traitement de type corona est une décharge corona sous air ambiant à la pression atmosphérique ou sous gaz à des pressions partielles élevées, préférablement entre 100 mbar et 3000 mbar, encore plus préférablement à la pression atmosphérique.

Etape (d)

L'étape (d) du procédé selon l'invention consiste à enduire au moins une face dudit support avec la composition d'enduction telle que décrite ci-dessus.

Ledit support présente avantageusement sur la face destinée à l'enduction, une rugosité moyenne Rz inférieure ou égale à 0,40 micromètre et, de préférence, une rugosité Ra (écart moyen arithmétique du profil) inférieure ou égale à 0,028 micromètre. L'autre face du support doit présenter des propriétés de glissant suffisantes pour permettre une manipulation facile du film, notamment son enroulement sur les différents rouleaux guides lors des étirages ou son enroulement sur lui-même.

Le dépôt de la composition d'enduction sur le support, de préférence sur un film polyester, peut être réalisé par les différentes techniques connues de l'homme de l'art. Ainsi, la composition peut être déposée par gravité à partir d'une couleuse à fente, ou par passage du film dans la dispersion, au moyen de rouleaux de transfert, par enduction en ligne avec un procédé de gravure inversée.

Selon un mode de réalisation préféré de l'invention, l'enduction du support est effectuée en ligne, ce qui permet non seulement une simplification de la mise en oeuvre industrielle mais également un gain de temps et d'argent considérable.

L'épaisseur de l'enduit est choisie en fonction de la cinétique de réticulation de ce dernier. Elle dépend notamment de la quantité d'enduit déposée, de l'extrait sec de la composition employée, du pourcentage de réticulant inclus dans la dispersion et des conditions de séchage de l'enduit.

L'étape (d) de dépôt par enduction de la composition d'enduction peut avoir lieu avant tout étirage du support, entre les deux étirages mono directionnels du support ou après les deux étirages directionnels, cette dernière option étant moins satisfaisante. Selon un mode de réalisation préféré du procédé selon l'invention, l'étape (d) de dépôt de la composition d'enduction est effectuée entre les deux étapes facultatives (c)&(f) d'étirage mono-directionnel.

Etapes d'étirage facultatives (c)&(f)

Le support est étiré dans une ou deux directions perpendiculaires. Lorsqu'il est étiré dans les deux directions, on parle d'un étirage bidimensionnel qui peut être d'abord longitudinal (Etirage Longitudinal EL, taux EL ≥ 3,0) suivi par un étirage transversal (Etirage Transversal ET, taux ET ≥ 3,5). Le taux d'étirage planaire (défini comme le produit du taux d'étirage longitudinal et du taux d'étirage transversal, quel que soit l'ordre de ces étirages) est par exemple compris entre 1 et 20, habituellement supérieur à 12. Les séquences d'étirage peuvent être différentes en fonction des machines utilisées sans influence sur les propriétés obtenues grâce à l'invention. Par exemple, on peut utilement utiliser des machines dites à séquence inverse ou des machines multi-étapes (« multistep »), des machines à séquences alternées ou des machines d'étirages simultanés, etc. La température d'étirage est par exemple comprise entre la température de transition vitreuse Tg du support et une température au maximum égale à Tg + 60°C en direction longitudinale de même qu'en direction transversale. L'étirage longitudinal est effectué par exemple de 3 à 6 fois et l'étirage transversal par exemple de 3 à 5 fois.

Etape facultative (g) de thermofixation

En général, à la suite du ou des étirages, le film subit une étape (g) de thermofixation. A titre d'exemple, pour

le PET, la thermofixation est effectuée entre 180°C et 250°C (par exemple à 240°C) pendant 1 à 60 secondes par exemple et ensuite à une température inférieure afin de stabiliser le film.

Etape (e) réticulation

Après dépôt de l'enduit, la réticulation a lieu pour former une couche primaire d'accrochage. La réticulation a lieu après le dépôt de l'enduit et est provoquée par le séchage de l'enduit, destiné à éliminer l'eau de la dispersion aqueuse.
Dans le cas d'une enduction en ligne, il n'est généralement pas nécessaire de procéder à une étape spécifique de séchage : le séchage est réalisé au cours des étapes d'étirages (c) et/ou(f) et/ou lors de la thermofixation (g). Toutefois, il est également envisageable dans la présente invention de mettre en oeuvre une étape de séchage par traitement thermique préalablement à l'étirage et/ou à la thermofixation.
A l'issue de l'étape (h) de réticulation, on obtient une couche primaire d'accrochage, dont le taux initial de fonctions acides libres en surface par rapport au poids total de polymère a significativement diminué suite à la réaction entre le réticulant et les fonctions de type carboxylique présentes dans le polymère acrylique et/ou méthacrylique contenu dans la composition d'enduction.
Ces fonctions acides libres proviennent du polymère acrylique et/ou méthacrylique contenu dans la composition d'enduction.
L'enduction est telle que la couche primaire d'accrochage obtenue sur le support a une épaisseur optimale de 80 nm $\pm$20 nm, ce qui correspond à 0,08 g/m$^2$ de support. L'épaisseur de l'enduit peut notamment varier avec :

- le contenu solide de la composition d'enduction, et/ou
- la méthode d'application et la taille des rouleaux utilisés pour l'application de la composition d'enduction sur le support.

Etape (h) revêtement

Pour obtenir un film composite, un revêtement apte à réagir avec la couche primaire d'accrochage est appliqué sur le support revêtu de la couche primaire d'accrochage selon l'invention.
L'application du revêtement consiste par exemple en une métallisation, de préférence une métallisation sous vide. Elle consiste à vaporiser sous vide, par exemple à une pression d'environ 4x10$^{-4}$ mbar, une fine couche métallique sur le film. L'évaporation est réalisée typiquement dans des creusets en céramiques chauffés par effet Joule à environ 1400°C à 1500°C. Le métal est alors projeté sur la surface à revêtir qui est en contact avec un rouleau refroidi appelé rouleau de couchage. Le métal condense alors immédiatement, formant ainsi une couche mince de 20 nm à 100 nm. Au cours de la métallisation, l'épaisseur de la couche de métal est contrôlée par des mesures de Densité Optique (DO, mesure de la transparence du film).

*COMPOSITION DE PRIMAIRE A ENDUIRE*

La composition d'enduction de primaire d'accrochage comprend :

→ un mélange d'au moins deux latex L1, L2 acryliques:

- L1 comprenant au moins un polymère P1 acrylique et/ou méthacrylique; P1 ayant un taux de gel TG1 supérieur ou égal à -en % en poids sec et dans un ordre croissant de préférence- 70; 80 ; 85, par rapport au poids total sec de P1;
- L2 comprenant au moins un polymère P2 acrylique et/ou méthacrylique différent de P1; P2 ayant un taux de gel TG2, inférieur ou égal à TG1 et inférieur ou égal à -en % en poids sec et dans un ordre croissant de préférence-20 ; 40 ; 70, en poids, par rapport au poids total sec de P2 ;
- P1 ayant un taux d'acide faible libre greffé en surface supérieur ou égal à -en microéquivalent par gramme de polymère et dans un ordre croissant de préférence- 0,8; 0,9 ; 1,0 ;
- la concentration massique de P2 est inférieure ou égale à -en % en poids sur sec par rapport à la masse totale sèche de P1 et P2 et donnée ci-après dans un ordre croissant de préférence, 60, 50, 40;

→ au moins un réticulant ;
→ de préférence, au moins un polyester soluble ou dispersible dans l'eau.
→ et de préférence de l'eau.

P1, P2, TG1, TG2 sont décrits plus en détail ci-dessus.
Cette composition de primaire d'accrochage est caractérisée par au moins l'une des caractéristiques suivantes :

→ les latex L1 L2 ont chacun un extrait sec de 10 % à 30 % en poids, et de préférence de 15 % à 25 % en poids;
→ le rapport pondéral polymères acryliques et/ou méthacryliques/copolyester hydrodispersible, en solution aqueuse, est de 99/1 à 50/50 et se situe de préférence entre 97/3 et 80/20.

Cette composition peut être obtenue en mélangeant les polymères acrylique et/ou méthacrylique (par exemple P1, P2) dans un liquide de dispersion, de préférence dans de l'eau. La composition se présente alors sous la forme d'une dispersion aqueuse.
Certains des latex acryliques pouvant être utilisés dans la présente invention sont disponibles commercialement.
Cette composition d'enduction est particulièrement intéressante dans la mesure où elle peut être utilisée comme couche primaire d'accrochage entre un film polymère et un revêtement métallique, et que, de façon tout à fait inattendue, elle confère au film composite obtenu non seulement des propriétés d'adhérence aussi bonnes, voire meilleures que dans l'art antérieur, mais aussi des propriétés barrières sensiblement améliorées.

*APPLICATIONS DU FILM COMPOSITE SELON L'INVENTION - ARTICLES ISSUS DE CES APPLICATIONS*

Les applications des films composites selon la présente invention sont notamment l'emballage alimentaire, l'emballage médical et les applications dites industrielles, par exemple l'isolation thermique dans le bâtiment (*e.g. Panneau d'isolation sous vide).* Concernant l'emballage, il peut s'agir de l'emballage de produits alimentaires depuis leur site fabrication ou de production jusqu'à leur arrivée chez le consommateur final. Ces films sont développés tout spécialement pour assurer une barrière soit aux gaz (oxygène, azote, hélium, vapeur d'eau, etc.) soit aux arômes. Le remplissage des emballages alimentaires peut être effectué à chaud. Les propriétés barrières des matériaux utilisés mais aussi le maintien de ces propriétés, c'est-à-dire de l'adhésion support/revêtement même dans des conditions de haute température et en conditions humides sont donc essentielles. Les stratifiés et complexes fabriqués à partir du film composite selon invention et de tout autre matériau matières première sous quelque forme que ce soit, sont des articles bénéficiant des propriétés avantageuses dudit film composite. Ces articles sont partis intégrante de la présente invention.

**TESTS**

**I. TAUX DE GEL**

La mesure du taux de gel des particules de polymères acryliques et/ou méthacryliques est effectuée grâce à un extracteur Soxhlet avec la technique suivante :
1 g de polymère acrylique et/ou méthacrylique est placé dans une capsule de cellulose qui a été pesée préalablement. Un ballon est rempli de 100 ml de solvant tétrahydrofurane (THF) et laissé sous atmosphère d'azote. Le système est chauffé jusqu'à 95°C à l'aide d'un bain d'huile. A 95°C, le flux d'azote est diminué et des feuilles d'aluminium sont posées autour de la colonne en verre en vue de la garder chaude et d'éviter la condensation du THF sur les parois. L'extraction démarre lorsque le THF s'évapore et lorsqu'il tombe dans la capsule solubilisant le polymère acrylique et/ou méthacrylique qui n'est pas réticulé. L'extraction dure 7 heures. Ensuite la capsule est séchée à 105°C pendant une nuit.
La mesure du taux de gel (G) est calculée avec l'équation suivante :

$$G\ (\%) = [(Mf - Mc)\ X\ 100] / Mi$$

dans laquelle :

- Mf est la masse finale, c'est-à-dire après séchage, de la capsule et du polymère non-soluble,
- Mc est la masse de la capsule, et
- Mi est la masse du polymère séché.

**II. RUGOSITES**

Les mesures de rugosité sont réalisées à l'aide d'un rugosimètre Hommel T 8000. Cette mesure permet d'obtenir la topographie de surface d'un film polyester à l'aide d'un palpeur à contact. Le palpeur employé est de type TKL 100 pointe courte à 90°, avec une pression de contact à 0,8mN et un diamètre de pointe à 0,5 micromètre.
Cette pointe balaye la surface du film suivant les conditions suivantes : longueur de palpage 1,75 millimètre, pas entre les mesures 20 micromètre, vitesse de palpage 0,1 millimètre par seconde, filtre ISO 11562, nombres de points d'acquisition par palpage 8000, nombre de passage 40.

Le balayage de la surface permet ainsi de mesurer le Rz et Ra. Le Rz (équation 1) étant la moyenne arithmétique des profondeurs de rugosité isolées $R_{z1}$ à $R_{z5}$ de cinq fractions de mesures successives $l_r$ du profil de rugosité filtré (Figure 3).

$$Equation\ 1: \qquad R_Z = \frac{1}{5}(R_{z1} + R_{z2} + R_{z3} + R_{z4} + R_{z5})$$

Le Ra (équation 2) est la moyenne arithmétique des écarts du profil de rugosité filtré, de la ligne moyenne au sein de la course de mesure $l_r$ (Figure 4)

$$Equation\ 2: \qquad R_a = \frac{1}{l_r}\int_0^{l_r} |Z(X)|dX$$

**III. PERMEABILITE O2 / H2O**

Les mesures de perméabilité à l'oxygène sont réalisées selon la norme ASTM F-1927 "Standard Test Method for determination of Oxygen Gas Transmission Rate, Permeance at Controlled Relative Humidity through Barrier Materials using a Coulometric Detector", les résultats sont exprimés en cc/m$^2$/j (centimètre cube par mètre carré et par jour). Les mesures de perméabilité à la vapeur d'eau sont réalisées selon la norme ASTM F-1249 "Standard Test Method for Water Vapor Transmission Rate through Plastic Film and Sheeting using a Modulated Infrared Sensor", les résultats sont exprimés en mg/m$^2$/j (milligramme par mètre carré et par jour).

**IV. PERMEABILITE O2 / H2O**

Les propriétés d'adhésion sont mesurées selon le test d'adhésion TA.

Le test d'adhésion TA est mené selon les recommandations AIMCAL TP-105-92 (Metallizing Technical Reference éditée par Association of Industrial Metallizers, Coaters and Laminators). Il est décrit pour le métal mais il convient pour les autres types de revêtement. Le test TA permet de mesurer la force d'adhésion entre le métal et le PET à l'aide d'un dynamomètre. Ce test est réalisé dans des conditions sèches et humides. Le support métallisé, de préférence un film PET métallisé, est scellé avec un film polyéthylène traité (DAP). Une éprouvette de 38 mm de large est ensuite découpée dans l'échantillon et va servir à la mesure. L'éprouvette est testée en traction à l'aide d'un dynamomètre INSTRON en vue de déterminer la force à appliquer pour arracher la couche d'aluminium du film enduit. Le support est fixé au mors du bas et le film DAP à celui du haut. De cette façon, une traction est exercée à 180° à une vitesse de 100 mm/min sur la zone scellée et la force nécessaire au délaminage est mesurée (norme suivie NF T 54-122, « Evaluation de la qualité d'une soudure ou d'un collage de deux éléments de feuilles par un essai de traction »). Le résultat de ce test TA est une force d'adhésion exprimée en gF/38 mm. Pour chaque échantillon, un minimum de 3 éprouvettes est testé ainsi, et chaque film est découpé en six bandes larges dont on mesure la densité optique afin de connaître la quantité de métal déposée. On mesure la force qu'il faut au dynamomètre pour arracher la couche de métal au film de PET en conditions sèche et humide. Pour la mesure en milieu humide, l'opérateur applique une faible quantité d'eau pour simuler un environnement chargé en humidité.

V. **TAUX RESIDUEL DE FONCTIONS ACIDES LIBRES**

Le taux résiduel de fonctions acides libres en surface peut être mesuré avec la méthode de dosage conductimétrique suivante :

Les dosages conductimétriques ont pour principal objectif d'évaluer la quantité de fonctions acides libres disponibles sur le polymère acrylique et/ou méthacrylique. Deux types de charge sont à distinguer : les charges « acide fort » et les charges « acide faible ».

Les charges « acide fort » sont notamment des charges sulfate $SO_4^{2-}$. Les charges « acides faibles » sont les charges carboxyliques $COO^-$ amenées par l'acide acrylique et/ou méthacrylique. Le dosage conductimétrique s'effectue sur un latex préalablement lavé et dont le taux de solide est précisément connu. Le latex brut est dilué pour atteindre un taux de solide inférieur à 5%. Ce latex dilué est ensuite lavé sur des résines échangeuses d'ions mixtes, c'est-à-dire anionique et cationique. A l'issue de cette étape, les contre-ions des charges positives sont des ions hydroxyles et ceux des charges négatives des protons. Ce traitement permet d'éliminer les espèces ioniques non greffées à la surface des

particules (charges provenant de l'amorceur ou molécules de tensioactif, libres ou faiblement adsorbées à la surface des particules). Le dosage consiste à déterminer les minimums de neutralisation des fonctions acides à l'aide d'une sonde conductimétrique et se déroule en deux étapes. La première étape consiste à doser les charges acide fort ($SO_4^{2-}$) par ajout d'une solution de soude. Une fois la neutralisation de ces charges terminée, on additionne un excès de soude, afin de transformer les fonctions acide carboxylique présentes en surface en ions carboxylates. Les charges carboxyliques ne sont en effet pas directement détectables par la soude, du fait de leur faible $pK_A$. La deuxième étape consiste alors à doser le latex en retour par l'acide chlorhydrique : on neutralise tout d'abord les ions hydroxyles $OH^-$ en excès, puis les charges acides faible $COO^-$. Le latex dilué est mis en contact avec la résine et agité pendant 30 à 40 minutes. Il est ensuite filtré sur laine de quartz pour ôter la résine et sa conductivité est mesurée. L'opération est répétée autant de fois que nécessaire, jusqu'à ce que la conductivité soit constante. Les lavages successifs s'accompagnent en effet d'une diminution de la conductivité et le lavage est considéré comme terminé lorsque la conductivité se stabilise. Le taux de solide du latex lavé est ensuite précisément déterminé, car les lavages successifs ont tendance à diluer le latex. La granulométrie du latex lavé est par ailleurs vérifiée, afin de s'assurer qu'elle n'ait pas évolué au cours des lavages. Une certaine quantité de latex est pesée avec précision et diluée dans 50 mL d'eau déminéralisée. L'ensemble est agité et dégazé pendant 10 minutes par un flux d'azote, afin d'éliminer toute trace de dioxyde de carbone dissous dans l'eau, qui pourrait fausser le dosage en provoquant la libération de fonctions carboxyliques. Un balayage d'azote est également maintenu au cours des dosages. Un pré-dosage permet d'évaluer la quantité de latex à utiliser, compte tenu de la concentration des solutions titrantes (i.e. ~$10^{-2}$ mol.$L^{-1}$), pour obtenir la plus grande précision. Trois dosages sont ensuite réalisés pour s'assurer de la fiabilité des résultats. Le suivi des dosages est effectué par un conductimètre équipé d'une électrode de platine et relié à une centrale d'acquisition. A partir des courbes de dosage, il est alors possible de calculer la concentration des charges dans le latex par les équations suivantes :

$$C_{charges\text{-}acide\text{-}fort} = \frac{[NaOH] \times V_{NaOH}}{m_{latex} \times TS} \times 10^3 \qquad C_{charges\text{-}acide\text{-}faible} = \frac{[HCl] \times V_{HCl}}{m_{latex} \times TS} \times 10^3$$

dans lesquelles :

- $C_{charges}$ désigne la concentration des charges dans le latex, exprimée en micro équivalent par gramme de polymère (μeq/gpolymère),
- [NaOH] et [HCl] représentent respectivement la concentration en soude et en acide chlorhydrique des solutions titrantes, exprimées en mol.$L^{-1}$,
- $V_{NaOH}$ et $V_{HCl}$ représentent respectivement le volume de solutions titrantes de soude et d'acide chlorhydrique utilisé pour le dosage, exprimées en litres,
- $m_{latex}$ représente la masse de latex, exprimée en gramme, et
- TS représente le taux de solide du latex dilué.

VI. **EPAISSEUR COUCHE PRIMAIRE**

La mesure de l'épaisseur de la couche primaire d'accrochage ou du support enduit de la couche primaire d'accrochage peut être effectuée par la méthode TOF-SIMS (Time of Flight-Secondary Ion Mass Spectrometry) où 2 types de mesures ont été réalisés.

1. Un profil de répartition qualitatif en profondeur de la surface jusqu'au coeur du support dans différentes conditions. Cela permet une estimation de l'épaisseur de la couche primaire d'accrochage en temps d'érosion et de faire une analyse comparative entre différents films de même nature.
2. Une mesure de l'épaisseur du film par relevé profilométrique d'un cratère obtenu sur un support de référence (avec arrêt de l'érosion ionique après élimination du revêtement), et le calcul de la vitesse d'érosion à partir du temps d'érosion correspondant pour l'éliminer.

A partir de la mesure n°2, une corrélation entre le temps d'érosion/vitesse d'érosion et l'épaisseur peut être établie. Ainsi l'épaisseur peut être estimée sur l'ensemble des supports où un temps d'érosion a été mesuré (mesure n°1).

La surface analysée est de 100 μm X 100 μm au centre du cratère d'érosion de taille supérieure (600 μm X 600 μm environ), ceci pour minimiser les effets de bords et de redéposition. Chaque point des profils est obtenu à partir d'un spectre de masse, ce qui permet une analyse élémentaire tout au long de la profondeur sondée. Ainsi, chaque élément ou contaminant présent à la surface, à coeur des couches et aux interfaces est automatiquement détecté. Sont indifféremment détectés dans le support et dans la couche primaire d'accrochage les éléments majeurs suivants : le

carbone (C) et l'oxygène (O). Dans la couche primaire d'accrochage des traces de soufre (S) sont détectées. Les espèces ioniques retenues pour les profils de répartitions en profondeur sont donc les éléments suivants : C, O, et S.

## EXEMPLES

### Exemple 1 : Amélioration des performances barrière du Latex 1 et Latex 2 par augmentation du taux de réticulant et ajout d'un polyester hydrosoluble

Dans la première partie de ce plan d'expérience, un polymère acrylique et méthacrylique présentant un taux de gel supérieur à 85 % et un taux d'acide faible libre greffé en surface inférieur ou égal à 2 micro équivalent par gramme de polymère a été utilisé. Il se présente sous la forme de particules dont le diamètre moyen est inférieur à 100 nm en dispersion dans de l'eau (0-15 ou 20% d'extrait sec). Ce polymère est noté par la suite « Latex 1 ». Celui-ci a été préparé selon le procédé standard de polymérisation radicalaire en phase aqueuse. Il présente la composition monomérique suivante (% en poids/poids total des monomères):

- 30 de méthyl méthacrylate
- 60 de butyle acrylate
- 10 d'acide méthacrylique.

Le réticulant utilisé est Cymel 303 LF, ci-après dénommé « Réticulant X ».

Aux compositions contenant le Latex 1 et le Reticulant X a été ajouté un polyester hydrosoluble porteur de groupes sulfonyloxy de formule suivante :

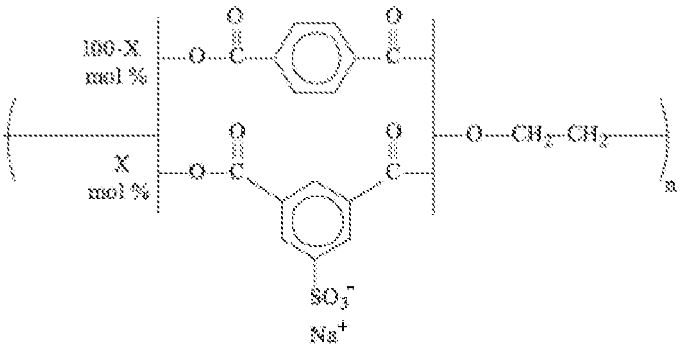

dans laquelle X vaut 20. Ce polymère est noté par la suite « PES ».

Cinq compositions d'enductions F1, F2, F3, F4, F5 ont été préparées :

- F1 : Latex 1 uniquement
- F2 : Latex 1 + Réticulant X - Rapport massique latex/réticulant de 80/20 (extrait sec/extrait sec).
- F3 : Latex 1 + Réticulant X - Rapport massique latex/réticulant de 70/30 (extrait sec/extrait sec)
- F4 : Latex 1 + Réticulant X - Rapport massique latex/réticulant de 80/20 (extrait sec/extrait sec) + 10% de PES en poids sec, par rapport au poids sec de Latex 1
- F5 : Latex 1 + Réticulant X - Rapport massique latex/réticulant de 70/30 (extrait sec/extrait sec) + 10% de PES en poids sec, par rapport au poids sec de Latex 1

Dans la deuxième partie de ce plan d'expérience, un polymère acrylique et méthacrylique présentant un taux de gel inférieur ou égal à 70 % et un taux d'acide faible libre greffé en surface inférieur ou égale à 2 micro équivalent par gramme de polymère a été utilisé. Il se présente aussi sous la forme de particules dont le diamètre moyen est inférieur à 100 nm en dispersion dans de l'eau (0-15 ou 20% d'extrait sec). Ce polymère est noté par la suite « Latex 2 ». Celui-ci a été préparé selon le même procédé et a la même composition monomérique que le «Latex 1».

A ce latex a été ajouté le Réticulant X et le PES

Cinq autres compositions d'enductions F6, F7, F8, F9, F10 ont été préparées :

- F6 : Latex 2 uniquement
- F7 : Latex 2 + Réticulant X - Rapport massique latex/réticulant de 80/20 (extrait sec/extrait sec).
- F8 : Latex 2 + Réticulant X - Rapport massique latex/réticulant de 70/30 (extrait sec/extrait sec)

- F9 : Latex 2 + Réticulant X - Rapport massique latex/réticulant de 80/20 (extrait sec/extrait sec) + 10% de PES en poids sec, par rapport au poids sec de Latex 1
- F10 : Latex 2 + Réticulant X - Rapport massique latex/réticulant de 70/30 (extrait sec/extrait sec) + 10% de PES en poids sec, par rapport au poids sec de Latex 1

Ces compositions ont été déposées sur un film PET par un procédé d'enduction en ligne héliographique selon la figure 1. Le rouleau hélio en rotation entraîne la composition d'enduction sur le film PET. Les rouleaux hélio petite ou grande gravure peuvent être utilisés pour l'enduction en ligne. La composition d'enduction a été préalablement séchée à l'aide d'un rayonnement infra-rouge à une longueur d'onde de l'ordre de 2 μm avant entrée dans le four d'étirage. Ce séchage est alors complété lors du passage du film enduit dans le four d'étirage.

Le film PET sur la face enduite est dit rugueux i.e. qu'il présente une rugosité moyenne Rz supérieur à 0,25 micromètre et une rugosité Ra (écart moyen arithmétique du profil) supérieur à 0, 028 micromètre.

Le film PET enduit d'une couche de primaire d'accrochage a été ensuite revêtu d'une couche d'aluminium obtenue par évaporation sous vide (à $4x10^{-4}$ mbar) lors d'un procède de métallisation industriel classique (machine TopMet de chez Applied Materials). Au cours de la métallisation, l'épaisseur de la couche de métal a été contrôlée par une mesure de transparence du film traduite en termes de Densité Optique (DO). La DO est comprise entre 2,4-3,0 ce qui correspond à une épaisseur de la couche métal de 30 à 60 nm.

Les propriétés d'adhésion du revêtement métallique aluminium en condition sèche et humide, et le taux de transmission d'oxygène ($PO_2$) du matériau obtenu ont été évaluées comme cela a été décrit ci-dessus et les résultats sont donnés dans le tableau 1.

Tableau 1

| | | $PO_2$ ($cm^3/m^2/J$) | Adhésion métal sec (gF/38 mm) | Adhésion métal humide (gF/38 mm) |
|---|---|---|---|---|
| Latex 1 | F1 | 2,85 | 60 | 4 |
| | F2 | 1,47 | >500 | 200 |
| | F3 | 1,72 | >500 | 360 |
| | F4 | 0,90 | >500 | 300-500 |
| | F5 | 0,97 | 700 | 200 |
| Latex 2 | F6 | 3,96 | 153 | 140 |
| | F7 | 0,70 | 98 | 26 |
| | F8 | 0,59 | 92 | 21 |
| | F9 | 0,70 | 101 | 39 |
| | F10 | 0,59 | 102 | 41 |

On constate que l'augmentation de la concentration en réticulant tend à améliorer le niveau de barrière du matériau pour le latex 1 et le Latex 2. Celui-ci est nettement plus amélioré avec le Latex 2. Cependant, on observe que l'augmentation du réticulant ne génère pas d'amélioration de l'adhésion métal en condition sèche et humide pour le latex 2, à l'opposé une diminution est observée. Concernant le Latex 1 nous mesurons une nette augmentation de l'adhésion métal avec un maximum pour la formulation F4. Cependant le niveau de perméabilité à l'oxygène reste insuffisant considérant les objectifs de la présente invention.

**Exemple 2 : Amélioration des performances barrière en combinant le Latex 1 et Latex 2 en présence d'un réticulant et d'un polyester hydrosoluble à groupe sulfonyloxy**

Dans le plan d'expérience suivant nous avons combiné le Latex 1 et Latex 2 en ajoutant le Réticulant X et le polymère noté « PES ». Cette formulation a été testée sur un film dit rugueux et un film lisse i.e. une rugosité moyenne Rz inferieur ou égale à 0,25 micromètre et une rugosité Ra (écart moyen arithmétique du profil) inferieur ou égale à 0, 028 micromètre.

Ces deux conditions sont aussi comparées aux formulations employant le Latex 1 comme seul composé acrylique enduit aussi sur un film dit rugueux et un film dit lisse.

4 compositions d'enductions F11 à F14 ont été préparées :

- F11: Latex 1+ Réticulant X - Rapport massique latex/réticulant de 70/30 (extrait sec/extrait sec) + 10% de PES en poids sec, par rapport au poids sec de Latex 1 Enduit sur un film polyester dit rugueux
- F12: Latex 1+ Réticulant X - Rapport massique latex/réticulant de 70/30 (extrait sec/extrait sec) + 10% de PES en poids sec, par rapport au poids sec de Latex 1 Enduit sur un film polyester dit lisse
- F13: Latex 1+ Latex 2-Rapport massique latex 2/ (Latex 1+Latex 2) de 30% en poids sec/sec + Réticulant X - Rapport massique latex/réticulant de 70/30 (extrait sec/extrait sec)
  + 10% de PES en poids sec, par rapport au poids sec de Latex 1
  Enduit sur un film polyester dit rugueux
- F14: Latex 1+ Latex 2-Rapport massique latex 2/ (Latex 1+Latex 2) de 30% en poids sec/sec + Réticulant X - Rapport massique latex/réticulant de 70/30 (extrait sec/extrait sec)
  + 10% de PES en poids sec, par rapport au poids sec de Latex 1
  Enduit sur un film polyester dit lisse

Ces compositions ont été utilisées comme décrit dans l'exemple 1 et les propriétés des matériaux obtenus ont été mesurées de la même manière, des mesures de perméabilité à l'humidité et des mesures de rugosité du film enduit avant métallisation ont été aussi réalisées. Les résultats sont donnés dans le tableau 2.

Tableau 2

| | F11 | F12 | F13 | F14 |
|---|---|---|---|---|
| Rz ($\mu$m) | 0,33 | 0,23 | 0,33 | 0,23 |
| Ra ($\mu$m) | 0,037 | 0,027 | 0,037 | 0,027 |
| $PO_2$ ($cm^3/m^2/J$) | 0,87 | 0,70 | 0,70 | 0,50 |
| $PH_2O$ (g/m2/J) | 0,21 | 0,19 | 0,20 | 0,17 |
| Adhésion métal sec (gF/38 mm) | >500 | >500 | >500 | >500 |
| Adhésion métal humide (gF/38 mm) | 100 | 112 | 80 | 162 |

Nous pouvons observer que les compositions F11 et F12 montrent des performances barrière et adhésion métal sec acceptable, on remarque que l'utilisation d'un film moins rugueux tend à diminuer le niveau de perméabilité à l'oxygène. L'ajout du latex 2 dans la composition a permis d'atteindre des niveaux de barrières encore plus favorables et d'atteindre des perméabilités à l'oxygène significativement inférieures à 0,8 $cm^3/m^2/J$ et des perméabilités à la vapeur d'eau inférieures à 0,3 g/m2/J.

Les films polyester enduits et métallisés obtenus à partir de ces formulations ont donc été soumis à une étape supplémentaire de mûrissement en température (10 jours à 60°C dans une étuve).

Les résultats sont résumés dans le tableau 3

Tableau 3

| | $PO_2$ ($cm^3/m^2/J$) | $PH_2O$ (g/m2/J) | Adhésion métal sec (gF/38 mm) | Adhésion métal humide (gF/38 mm) |
|---|---|---|---|---|
| Latex 1 avec Réticulant X avec PES→F12<br>Latex 1+Latex 2 avec Réticulant X avec PES→F14 | | | | |
| Avant Murissement | | | | |
| F12 | 0,7 | 0,19 | >500 | 112 |
| F14 | 0,5 | 0,17 | >500 | 162 |
| Après Murissement | | | | |
| F12 | 0,65 | 0,18 | >500 | 350 |
| F14 | 0,46 | 0,22 | >500 | >500 |

De façon surprenante, on observe une nette amélioration de l'adhésion métal humide pour la formulation composé des deux latex en présence du réticulant X à une concentration de 20% par rapport au poids total sec de latex acrylique et contenant le PES (Formulation F14). Cette amélioration est aussi observée pour la formulation F12, mais dans une moindre mesure. La combinaison des latex L1&L2, c'est-à-dire des polymères acryliques et/ou méthacryliques

P1&P2 selon invention, associé au murissement en température permet d'atteindre les propriétés d'adhésion métal en condition humide visées dans la présente invention.

## Revendications

1. Film composite comprenant un support polymère, de préférence polyester, au moins un revêtement adhérant sur au moins l'une des faces du support, et au moins une couche de primaire d'accrochage réticulé entre le support et le revêtement ;
ledit film ayant des propriétés barrière vis-à-vis des gaz améliorées tout comme l'adhérence du revêtement sur le support,
**caractérisé en ce que**

 - ce primaire comprend au moins un polymère P1 acrylique et/ou méthacrylique, au moins un polymère P2 acrylique et/ou méthacrylique différent de P1, au moins un réticulant, et, de préférence, au moins un polyester soluble ou dispersible dans l'eau ;
 - P1 ayant un taux de gel TG1 supérieur ou égal à -en % en poids sec et dans un ordre croissant de préférence- 70; 80 ; 85, par rapport au poids total sec de P1 ;
 - P2 ayant un taux de gel TG2, inférieur ou égal à TG1 et inférieur ou égal à - en % en poids sec et dans un ordre croissant de préférence- 20; 40 ; 70, en poids, par rapport au poids total sec de P2 ;
 - P1 ayant un taux d'acide faible libre greffé en surface supérieur ou égal à - en microéquivalent par gramme de polymère et dans un ordre croissant de préférence-0,8 ; 0,9 ; 1,0 ;
 - la concentration massique de P2 est inférieure ou égale à - en % en poids sur sec par rapport à la masse totale sèche de P1 et P2 et donnée ci-après dans un ordre croissant de préférence, 60, 50, 40.

2. Film selon la revendication 1, **caractérise en ce que** P1 et P2 ont la même composition monomérique qualitative et quantitative.

3. Film selon la revendication 1 ou 2, **caractérisé en ce qu'**il a muri pendant 1 à 50 jours, de préférence, 5 à 20 jours, et, plus préférentiellement encore, de 8 à 15 jours, à une température comprise entre 10 et 120°C, de préférence entre 30 et 90°C, et, plus préférentiellement encore, entre 50 et 80°C, à la pression atmosphérique ambiante.

4. Film selon l'une au moins des revendications précédentes **caractérisé en ce que** les proportions massiques sur sec (poids/poids) de P1 ou de P2 par rapport au réticulant sont comprises entre 95/5 et 50/50, de façon plus préférée entre 90/10 et 65/45, et de façon encore plus préférée entre 80/20 et 60/40.

5. Film selon l'une au moins des revendications précédentes, **caractérisé en ce que** le réticulant comporte au moins une résine, de préférence au moins une résine à base d'amine, et, plus préférentiellement encore au moins une résine mélamine-aldéhyde, et, de manière encore plus préférée, au moins une résine benzoguanamine-aldéhyde; et/ou au moins une résine dérivée des résines susévoquées.

6. Film selon l'une au moins des revendications précédentes, **caractérisé par** l'une et/ou l'autre des caractéristiques suivantes :

 i le polyester soluble ou dispersible dans l'eau est porteur de groupes sulfonyloxy et il est de préférence choisi dans le groupe comprenant -ou mieux encore constitué parles copolyesters dérivés d'au moins un acide aromatique dicarboxylique et d'au moins un diol aliphatique et comportant une pluralité de groupes sulfonyloxy de formule générale (I) :

 $$-(\text{-S03}^-)_n\text{M} \qquad \text{(I)}$$

 dans laquelle n est égal à 1 ou 2, M représente un atome d'hydrogène, un métal alcalin ou alcalino-terreux, un cation ammonium ou un cation ammonium quaternaire ;
 ii la teneur en polyester soluble ou dispersible dans l'eau, est comprise entre 2% et 30% en poids, de façon plus préférée entre 5% et 20% en poids, et de façon encore plus préférée entre 8% et 12% en poids sec, par rapport au poids sec de polymère acrylique et/ou méthacrylique.

7. Film selon l'une au moins des revendications précédentes, **caractérisé en ce que** la rugosité moyenne Rz du

support, sur sa(ses) face(s) porteuse(s) d'un revêtement, est inférieure ou égale à 0,40 microns et **en ce que** cette face ne comporte en moyenne pas plus de 20 pics ayant une hauteur égale ou supérieure à 1 micron et pas plus de 150 pics ayant une hauteur comprise entre 0,4 et 1 microns, par millimètre carré, lorsque l'épaisseur de la couche de primaire est inférieure à 0,6 microns.

8. Film selon la revendication 7, **caractérisé en ce que** la(les) face(s) du support revêtu d'au moins une couche de primaire d'accrochage réticulé ne comporte en moyenne pas plus de 20 pics ayant une hauteur égale ou supérieure à 1 micron et pas plus de 100 pics ayant une hauteur comprise entre 0,4 et 1 micron, par millimètre carré.

9. Film selon l'une au moins des revendications précédentes, **caractérisé par** au moins l'une des caractéristiques suivantes :

→ le support en polyester est étiré biaxialement ;
→ le support en polyester est choisi parmi les polytéréphtalates ou des polynaphtalène-dicarboxylates d'alkylènediol, de préférence parmi le polytéréphtalate d'éthylèneglycol ou de butanediol-1,4 et les copolyesters comportant au moins 80 % en moles de motifs téréphtalate d'éthylèneglycol ;
→ le support en polyester a une épaisseur inférieure ou égale à 150 μm (micromètres), de façon plus préférée comprise entre 4 μm et 100 μm, de façon plus préférée comprise entre 4 μm et 40 μm, et de façon encore plus préférée comprise entre 4 μm et 15 μm ;
→ le support en polyester est constitué d'au moins deux couches présentant des propriétés de surface différentes ;
→ le support en polyester dissymétrique est réalisé selon la technique de la coextrusion d'au moins deux couches de polyester comportant chacune des taux de charges différents et le cas échéant des charges différentes, le polyester utilisé étant préférentiellement le même pour les deux couches coextrudées et la couche de polyester devant recevoir la couche de primaire étant la plus faiblement chargée ;
→ le support en polyester comprend en partie du polyester recyclé issu du support lui-même et/ou du support enduit d'un primaire d'accrochage réticulé tel que défini dans les revendications précédentes et/ou du support enduit du susdit primaire et revêtu du revêtement tel que défini dans les revendications précédentes.

10. Film selon l'une au moins des revendications précédentes, **caractérisé en ce que** la (ou les) couche(s) de primaire d'accrochage réticulée(s) forme(ent) une interface dont l'épaisseur est inférieure ou égale à 200 nm (nanomètres), de façon plus préférée comprise entre 40 nm et 120 nm, de façon plus préférée comprise entre 50 nm et 100 nm, et de façon encore plus préférée comprise entre 60 nm et 90 nm.

11. Film selon l'une au moins des revendications précédentes, **caractérisé par** au moins l'une des caractéristiques suivantes :

→ le revêtement comporte au moins une couche métallique composée d'au moins un métal et/ou au moins un oxyde métallique et/ou un oxyde de silicium, le métal étant de préférence choisi parmi l'aluminium, le cuivre, le chrome, le nickel, l'argent ;
l'aluminium étant particulièrement préféré ;
→ l'épaisseur du revêtement se situe entre 0,01 et 0,06 micron.

12. Film selon l'une au moins des revendications précédentes, **caractérisé en ce qu'**il présente au moins l'une des caractéristiques suivantes :

→ une perméabilité à l'oxygène, mesurée à 23 °C sous 0 % d'humidité relative, exprimée $cm^3/m^2/24$ h et donnée ci-après dans un ordre croissant de préférence, inférieure ou égale à 0,9 ; 0,8 ; 0,7 ; 0,6 ;
→ une perméabilité à la vapeur d'eau , mesurée à 38 °C sous 90 % d'humidité relative, exprimée en $g/m^2/24h$ et donnée ci-après dans un ordre croissant de préférence, inférieure ou égale à 0,5 ; 0,4 ; 0,3 ;
→ une adhésion mesurée dans un test TA supérieure ou égale à -en gf/38mm et dans un ordre croissant de préférence, 300 ; 400 ; 500.

13. Film selon l'une au moins des revendications précédentes, **caractérisé en ce qu'**il est solidarisé avec au moins un autre film, choisi parmi les films selon l'une au moins des revendications précédentes, les plastiques, les métaux et analogues, leurs oxydes, pour former un stratifié.

14. Procédé de fabrication, en ligne ou en reprise de préférence en ligne, du film selon l'une au moins des revendications

précédentes,
**caractérisé par** la mise en oeuvre des étapes suivantes :

-a- on met en oeuvre un support tel que défini dans l'une au moins des revendications précédentes ;
-b- éventuellement, on effectue un traitement physique de surface dudit support ;
-c- on enduit au moins une face dudit support avec une composition d'enduction permettant d'obtenir au moins une couche de primaire d'accrochage réticulée telle que définie dans l'une au moins des revendications précédentes ;
-d- on fait réticuler l'enduit pour obtenir la couche de primaire d'accrochage ;
-e- on applique sur la couche de primaire d'accrochage réticulée, un revêtement tel que défini dans l'une au moins des revendications précédentes .
-f- on soumet l'ensemble composite support/primaire/revêtement à un mûrissement en température, avantageusement pendant 1 à 50 jours, de préférence, 5 à 20 jours, et, plus préférentiellement encore, de 8 à 15 jours, à une température comprise entre 10 et 120°C, de préférence entre 30 et 90°C, et, plus préférentiellement encore, entre 50 et 80°C, à la pression atmosphérique ambiante.

**15.** Composition d'enduction en particulier mise en oeuvre dans le procédé selon la revendication 14, **caractérisée en ce qu'**elle comprend :

→ un mélange d'au moins deux latex L1, L2 acryliques:

- L1 comprenant au moins un polymère P1 acrylique et/ou méthacrylique; P1 ayant un taux de gel TG1 supérieur ou égal à -en % en poids sec et dans un ordre croissant de préférence- 70; 80 ; 85, par rapport au poids total sec de P1;
- L2 comprenant au moins un polymère P2 acrylique et/ou méthacrylique différent de P1; P2 ayant un taux de gel TG2, inférieur ou égal à TG1 et inférieur ou égal à -en % en poids sec et dans un ordre croissant de préférence-20 ; 40 ; 70, en poids, par rapport au poids total sec de P2 ;
- P1 ayant un taux d'acide faible libre greffé en surface supérieur ou égal à -en microéquivalent par gramme de polymère et dans un ordre croissant de préférence- 0,8 ; 0,9 ; 1,0 ;
- la concentration massique de P2 est inférieure ou égale à -en % en poids sur sec par rapport à la masse totale sèche de P1 et P2 et donnée ci-après dans un ordre croissant de préférence, 60 ; 50 ; 40;

→ au moins un réticulant ;
→ de préférence, au moins un polyester soluble ou dispersible dans l'eau.
→ et de préférence de l'eau.

**16.** Composition d'enduction selon la revendication 15, **caractérisée par** au moins l'une des caractéristiques suivantes :

les latex L1 L2 ont chacun un extrait sec de 10 % à 30 % en poids, et de préférence de 15 % à 25 % en poids ;
le rapport pondéral polymères acryliques et/ou méthacryliques/copolyester hydrodispersible, en solution aqueuse, est de 99/1 à 50/50 et se situe de préférence entre 97/3 et 80/20.

**17.** Article choisi dans le groupe constitué par des emballages alimentaires et non-alimentaires, les films ou feuilles pour la protection de support et les films ou feuilles pour l'isolation thermique et la protection contre l'humidité dans le secteur du bâtiment, **caractérisé en ce qu'**il comprend au moins un film selon l'une au moins des revendications 1 à 13 ou tel qu'obtenu à l'issue du procédé selon la revendication 14.

## Patentansprüche

**1.** Verbundfolie, umfassend einen polymeren Träger, vorzugsweise Polyester, mindestens eine Beschichtung, die auf mindestens einer Seite des Trägers haftet, und mindestens eine Schicht aus vernetztem Primer zwischen dem Träger und der Beschichtung;
wobei der Film verbesserte Gasbarriereeigenschaften sowie die Haftung der Beschichtung an dem Substrat aufweist, **dadurch gekennzeichnet, dass**

- dieser Primer mindestens ein Acryl- und/oder Methacrylpolymer P1, mindestens ein von P1 verschiedenes Acryl- und/oder Methacrylpolymer P2, mindestens ein Vernetzungsmittel und vorzugsweise mindestens einen

wasserlöslichen oder dispergierbaren Polyester umfasst;
- P1 mit einer Gelrate TG1 größer oder gleich -in % des Trockengewichts und in zunehmender Reihenfolge der Präferenz - 70; 80; 85, bezogen auf das Gesamttrockengewicht von P1 ;
- P2 mit einer Gelrate TG2, kleiner oder gleich TG1 und kleiner oder gleich - in % des Trockengewichts und in zunehmender Reihenfolge der Präferenz - 20; 40 ; 70, bezogen auf das Gesamttrockengewicht von P2;
- P1 mit einem Gehalt an oberflächengepfropfter freier schwacher Säure größer oder gleich - in Mikroäquivalent pro Gramm Polymer und in zunehmender Reihenfolge der Präferenz - 0,8 ; 0,9 ; 1,0 ;
- die Massenkonzentration von P2 kleiner oder gleich - in Gew.-% auf Trockenbasis, bezogen auf die Gesamttrockenmasse von P1 und P2, ist und in zunehmender Reihenfolge der Präferenz, 60, 50, 40, unten angegeben ist.

**2.** Folie nach Anspruch 1, **dadurch gekennzeichnet, dass** P1 und P2 die gleiche qualitative und quantitative Monomerzusammensetzung aufweisen.

**3.** Folie nach Anspruch 1 oder 2, **dadurch gekennzeichnet, dass** sie 1 bis 50 Tage, vorzugsweise 5 bis 20 Tage und insbesondere 8 bis 15 Tage bei einer Temperatur zwischen 10 und 120°C, vorzugsweise zwischen 30 und 90°C, und vorzugsweise zwischen 50 und 80°C bei Umgebungsluftdruck gehärtet ist.

**4.** Folie nach mindestens einem der vorstehenden Ansprüche, **dadurch gekennzeichnet, dass** die Trockengewichtsanteile (Gewicht/Gewicht) von P1 oder P2 bezogen auf den Vernetzer zwischen 95/5 und 50/50, bevorzugter zwischen 90/10 und 65/45 und noch bevorzugter zwischen 80/20 und 60/40 liegen.

**5.** Folie nach mindestens einem der vorstehenden Ansprüche, **dadurch gekennzeichnet, dass** das Vernetzungsmittel mindestens ein Harz, vorzugsweise mindestens ein Harz auf Aminbasis, und insbesondere mindestens ein Melamin-Aldehydharz und insbesondere mindestens ein Benzoguanamin-Aldehydharz umfasst; und/oder mindestens ein Harz, das von den vorstehenden Harzen abgeleitet ist.

**6.** Folie nach mindestens einem der vorstehenden Ansprüche, **gekennzeichnet durch** eines und/oder anderes der folgenden Merkmale:

i der wasserlösliche oder wasserdispergierbare Polyester ein Träger von Sulfonyloxygruppen ist und vorzugsweise ausgewählt ist aus der Gruppe beinhaltend - oder besser noch bestehend aus - Copolyestern, die von mindestens einer aromatischen Dicarbonsäure und mindestens einem aliphatischen Diol abgeleitet sind und eine Vielzahl von Sulfonyloxygruppen der allgemeinen Formel (I) beinhalten:

$$-(-S0_3^-)_nM \qquad (I)$$

worin n gleich 1 oder 2 ist, M ein Wasserstoffatom, ein Alkali- oder Erdalkalimetall, ein Ammoniumkation oder ein quartäres Ammoniumkation darstellt;
ii der Gehalt an wasserlöslichem oder wasserdispergierbarem Polyester zwischen 2 und 30 Gew.-%, vorzugsweise zwischen 5 und 20 Gew.-% und noch bevorzugter zwischen 8 und 12 Gew.-%, bezogen auf das Trockengewicht von Acryl- und/oder Methacrylpolymer, liegt.

**7.** Folie nach mindestens einem der vorstehenden Ansprüche, **dadurch gekennzeichnet, dass** die durchschnittliche Rauheit Rz des Trägers auf seiner(n) Auflagefläche(n) einer Beschichtung kleiner oder gleich 0,40 Mikron ist und dass diese Fläche im Durchschnitt nicht mehr als 20 Spitzen mit einer Höhe gleich oder größer als 1 Mikron und nicht mehr als 150 Spitzen mit einer Höhe zwischen 0,4 und 1 Mikron pro Quadratmillimeter aufweist, wenn die Dicke der Primerschicht kleiner als 0,6 Mikron ist.

**8.** Folie nach Anspruch 7, **dadurch gekennzeichnet, dass** die Fläche(n) des Trägers, die mit mindestens einer Schicht aus vernetztem Primer beschichtet ist (sind), im Durchschnitt nicht mehr als 20 Peaks mit einer Höhe gleich oder größer als 1 Mikron und nicht mehr als 100 Peaks mit einer Höhe zwischen 0,4 und 1 Mikron pro Quadratmillimeter aufweisen.

**9.** Folie nach mindestens einem der vorgenannten Ansprüche, **gekennzeichnet durch** mindestens eines der folgenden Merkmale:

→ der Polyesterträger wird biaxial gestreckt;
→ der Polyesterträger ausgewählt ist aus Polyterephthalaten oder Polynaphthalindicarboxylaten eines Alkylendiols, vorzugsweise Ethylenglykol- oder 1,4-Butandiolpolyterephthalat und Copolyestern, die mindestens 80 Mol-% EthylenglykolterephthalateEinheiten aufweisen;
→ das Polymersubstrat eine Dicke von 150 μm (Mikrometer) oder weniger, bevorzugter zwischen 4 μm und 100 μm, bevorzugter zwischen 4 μm und 40 μm und noch bevorzugter zwischen 4 μm und 15 μm aufweist;
→ der Polyesterträger aus mindestens zwei Schichten mit unterschiedlichen Oberflächeneigenschaften besteht;
→ der asymmetrische Polyesterträger wird durch die Coextrusionstechnik aus mindestens zwei Polyesterschichten mit jeweils unterschiedlichen Füllraten und gegebenenfalls unterschiedlichen Füllstoffen hergestellt, wobei der verwendete Polyester vorzugsweise für die beiden coextrudierten Schichten gleich ist und die Polyesterschicht zur Aufnahme der Primerschicht die am leichtesten belastete ist;
→ der Polyesterträger teilweise recyceltes Polyester aus dem Träger selbst und/oder dem Träger, der mit einem vernetzten Haftprimer beschichtet ist, wie in den vorangegangenen Ansprüchen definiert, und/oder dem Träger, der mit dem Primer beschichtet und mit der Beschichtung beschichtet ist, wie in den vorangegangenen Ansprüchen definiert.

**10.** Folie nach mindestens einem der vorgenannten Ansprüche, **dadurch gekennzeichnet, dass** die vernetzte(n) Primerschicht(en) eine Grenzfläche bildet (bilden), deren Dicke kleiner oder gleich 200 nm (Nanometer), bevorzugter zwischen 40 nm und 120 nm, bevorzugter zwischen 50 nm und 100 nm und noch bevorzugter zwischen 60 nm und 90 nm ist.

**11.** Folie nach mindestens einem der vorgenannten Ansprüche, **gekennzeichnet durch** mindestens eines der folgenden Merkmale:

→ die Beschichtung mindestens eine Metallschicht umfasst, die aus mindestens einem Metall und/oder mindestens einem Metalloxid und/oder einem Siliziumoxid besteht, wobei das Metall vorzugsweise aus Aluminium, Kupfer, Chrom, Nickel und Silber ausgewählt ist; Aluminium wird besonders bevorzugt;
→ die Schichtdicke liegt zwischen 0,01 und 0,06 Mikron.

**12.** Folie nach mindestens einem der vorgenannten Ansprüche, **dadurch gekennzeichnet, dass** sie mindestens eines der folgenden Merkmale aufweist:

→ eine Sauerstoffdurchlässigkeit, gemessen bei 23 °C bei 0 % relativer Luftfeuchtigkeit, ausgedrückt in $cm^3/m^2/24$ h und nachstehend in aufsteigender Reihenfolge der Präferenz, kleiner oder gleich 0,9 ; 0,8; 0,7 ; 0,6 ;
→ eine Wasserdampfdurchlässigkeit, gemessen bei 38 °C bei 90% relativer Luftfeuchtigkeit, ausgedrückt in $g/m^2/24h$ und nachstehend in aufsteigender Reihenfolge der Präferenz, kleiner oder gleich 0,5; 0,4 ; 0,3 ;
→ eine Adhäsion, gemessen in einem Adhäsionstest (TA) größer oder gleich -en gf/38mm und in zunehmender Reihenfolge der Präferenz, 300; 400; 500.

**13.** Folie nach mindestens einem der vorhergehenden Ansprüche, **dadurch gekennzeichnet, dass** sie mit mindestens einem anderen Film solidarisiert ist, der aus den Filmen nach mindestens einem der vorhergehenden Ansprüche, Kunststoffe, Metalle und Analoga, deren Oxide, ausgewählt ist, um ein Laminat zu bilden.

**14.** Verfahren zur Herstellung der Folie in einem Durchgang oder in mehreren Etappen, bevorzugt in einem Durchgang, nach mindestens einem der vorstehenden Ansprüche, **gekennzeichnet durch** die Durchführung der folgenden Schritte:

-a- Bereitstellen einers Trägers, wie er in mindestens einem der vorhergehenden Ansprüche definiert ist;
-b- Gegebenenfalls Durchführen einer physikalischen Oberflächenbehandlung des genannten Trägers;
-c- Beschichten von mindestens einer Seite des Trägers mit einer Beschichtungszusammensetzung, um mindestens eine Schicht eines vernetzten Primers zu erhalten, wie er in mindestens einem der vorhergehenden Ansprüche definiert ist;
-d- Vernetzen der Beschichtung, um den vernetzten Primer zu erhalten;
-e- Aufbringen einer Beschichtung, wie sie in mindestens einem der obigen Ansprüche definiert ist, auf den vernetzten Primer.
-f- Behandeln des Verbunds Träger/Primer/Beschichtung einer Temperaturhärtung, vorzugsweise für 1 bis 50 Tage, vorzugsweise 5 bis 20 Tage, und insbesondere 8 bis 15 Tage, bei einer Temperatur zwischen 10 und 120°C, vorzugsweise zwischen 30 und 90°C, und vorzugsweise zwischen 50 und 80°C, bei Umgebungsluftdruck.

**15.** Beschichtungszusammensetzung, insbesondere zur Verwendung bei dem Verfahren nach Anspruch 14, **dadurch**

**gekennzeichnet, dass** sie umfasst:

→ eine Mischung aus mindestens zwei L1, L2 Acryllatexen:

- L1, umfassend mindestens ein Acryl- und/oder Methacrylpolymer P1; P1 mit einer TG1-Gelrate größer oder gleich -in % des Trockengewichts und in zunehmender Reihenfolge der Präferenz - 70; 80; 85, bezogen auf das Gesamttrockengewicht von P1;
- L2, umfassend mindestens ein Acryl- und/oder Methacrylpolymer P2, das sich von P1 unterscheidet; P2 mit einer Gelrate TG2, die kleiner oder gleich TG1 und kleiner oder gleich -in % des Trockengewichts und in zunehmender Reihenfolge der Präferenz - 20; 40; 70, bezogen auf das Gesamttrockengewicht von P2 ;
- P1 mit einem Gehalt an freier Oberfläche gepfropfter schwacher Säure größer oder gleich - in Mikroäquivalent pro Gramm Polymer und in zunehmender Reihenfolge der Präferenz - 0,8 ; 0,9 ; 1,0 ;
- die Massenkonzentration von P2 kleiner oder gleich -in Gew.-% auf Trockenbasis, bezogen auf die Gesamttrockenmasse von P1 und P2, ist und nachstehend in zunehmender Reihenfolge der Präferenz, 60; 50; 40, angegeben ist;

→ mindestens ein Vernetzungsmittel;
→ vorzugsweise mindestens einen wasserlöslichen oder wasserdispergierbaren Polyester.
→ und vorzugsweise Wasser.

**16.** Beschichtungszusammensetzung nach Anspruch 15, **gekennzeichnet durch** mindestens eine der folgenden Eigenschaften:

Die Latexe L1, L2 haben jeweils einen Trockenextrakt von 10 bis 30 Gew.-%, vorzugsweise 15 bis 25 Gew.-%;
Wobei das Gewichtsverhältnis von Acryl- und/oder Methacrylpolymeren zu wasserdispergierbarem Polyester in wässriger Lösung 99/1 bis 50/50 und vorzugsweise zwischen 97/3 und 80/20 beträgt.

**17.** Gegenstand, ausgewählt aus der Gruppe bestehend aus Food- und Non-Food-Verpackungen, Folien oder Platten zum Schutz von Trägern und Folien oder Platten zur Wärmedämmung und zum Feuchtigkeitsschutz im Baubereich, **dadurch gekennzeichnet, dass** er mindestens eine Folie nach mindestens einem der Ansprüche 1 bis 13 oder eine als Verfahrensprodukt des Verfahrens nach Anspruch 14 erhältliche Folie umfasst.

## Claims

**1.** Composite film comprising a polymer support, preferably polyester, at least one adhesive covering on at least one of the faces of the support, and at least one cross-linked adhesion primer layer between the support and the covering; said film having improved barrier properties with respect to gases as well as for adhesion of the covering onto the support,
**characterized in that**

- this primer comprises at least one acrylic and/or methacrylic polymer P1, at least one acrylic and/or methacrylic polymer P2 different from P1, at least one crosslinking agent, and, preferably, at least one polyester that is soluble or dispersible in water;
- P1 having a gel content TG1 greater than or equal to - in % dry weight and in an increasing order of preference - 70, 80, 85, with respect to the total dry weight of P1;
- P2 having a gel content TG2 less than or equal to TG1 and less than or equal to - in % dry weight and in an increasing order of preference - 20, 40, 70 by weight with respect to the total dry weight of P2;
- P1 having a surface-grafted free weak acid content greater than or equal to - in microequivalent per gram of polymer and in an increasing order of preference - 0.8, 0.9, 1.0;
- the mass concentration of P2 is less than or equal to - in % dry weight with respect to the total dry weight of P1 and P2 and is given hereinafter in an increasing order of preference, 60, 50, 40.

**2.** Film according to claim 1, **characterized in that** P1 and P2 have the same qualitative and quantitative monomer composition.

**3.** Film according to claim 1 or 2, **characterized in that** it was cured for 1 to 50 days, preferably 5 to 20 days, and,

more preferably, 8 to 15 days, at a temperature comprised between 10 and 120°C, preferably between 30 and 90°C, and, even more preferentially, between 50 and 80°C, at ambient atmospheric pressure.

4. Film according to at least one of the preceding claims, **characterized in that** the dry mass ratios (weight/weight) of P1 or P2 relative to the crosslinking agent are comprised between 95/5 and 50/50, more preferably between 90/10 and 65/45, and even more preferably between 80/20 and 60/40.

5. Film according to at least one of the preceding claims, **characterized in that** the crosslinking agent contains at least one resin, preferably at least one amine-based resin, and, even more preferentially at least one melamine-aldehyde resin, and, even more preferentially, at least one benzoguanamine-aldehyde resin; and/or at least one resin derived from the aforementioned resins.

6. Film according to at least one of the preceding claims, **characterized by** one and/or the other of the following characteristics:

i the polyester that is soluble or dispersible in water is a carrier of sulphonyloxy groups and it is preferably selected from the group comprising - or better still constituted by - copolyesters derived from at least one aromatic dicarboxylic acid and from at least one aliphatic diol and containing a plurality of sulphonyloxy groups of general formula (I):

$$-(-S03^{-})_{n}M \qquad (I)$$

in which n is equal to 1 or 2, M represents a hydrogen atom, an alkali or alkaline-earth metal, an ammonium cation or a quaternary ammonium cation;
ii the content of polyester that is soluble or dispersible in water is comprised between 2% and 30% by weight, more preferably between 5% and 20% by weight, even more preferably between 8% and 12% by dry weight, relative to the dry weight of acrylic and/or methacrylic polymer.

7. Film according to at least one of the preceding claims, **characterized in that** the average roughness Rz of the support, on its face(s) carrying a covering, is less than or equal to 0.40 microns and **in that** this face does not contain on average more than 20 peaks having a height equal to or greater than 1 micron and not more than 150 peaks having a height comprised between 0.4 and 1 microns, per square millimetre, when the thickness of the primer layer is less than 0.6 microns.

8. Film according to claim 7, **characterized in that** the face(s) of the support covered with at least one cross-linked adhesion primer layer does not contain on average more that 20 peaks having a height equal to or greater than 1 micron and not more than 100 peaks having a height comprised between 0.4 and 1 micron per square millimetre.

9. Film according to at least one of the preceding claims, **characterized by** at least one of the following characteristics:

→ the polyester support is biaxially stretched;
→ the polyester support is selected from polyterephthalates or polynaphthalene-dicarboxylates of alkylene diol, preferably from ethylene glycol or butanediol-1,4 polyterephthalate and copolyesters containing at least 80 mole % of ethylene glycol terephthalate;
→ the polyester support has a thickness less than or equal to 150 μm (micrometres), more preferably comprised between 4 μm and 100 μm, more preferably comprised between 4 μm and 40 μm, and even more preferably comprised between 4 μm and 15 μm;
→ the polyester support is constituted by at least two layers having different surface properties;
→ the dissymmetrical polyester support is produced according to the technique of coextrusion of at least two layers of polyester each containing different filler contents and if appropriate different fillers, the polyester used being preferentially the same for the two co-extruded layers and the polyester layer that is to receive the primary layer having the lowest filler content.
→ the polyester support partially comprises recycled polyester originating from the support itself and/or from the support coated with a cross-linked adhesion primer as defined in the preceding claims and/or from the support coated with the aforementioned primer and covered with the covering as defined in the preceding claims.

10. Film according to at least one of the preceding claims, **characterized in that** the cross-linked adhesion primer layer(s) form an interface the thickness of which is less than or equal to 200 nm (nanometres), more preferably

comprised between 40 nm and 120 nm, more preferably comprised between 50 nm and 100 nm, and even more preferably comprised between 60 nm and 90 nm.

**11.** Film according to at least one of the preceding claims, **characterized by** at least one of the following characteristics:

→ the covering contains at least one metallic layer composed of at least one metal and/or at least one metal oxide and/or one silicon oxide, the metal being preferably selected from aluminium, copper, chrome, nickel, silver; aluminium being particularly preferred;
→ the thickness of the covering is between 0.01 and 0.06 microns.

**12.** Film according to at least one of the preceding claims, **characterized in that** it has at least one of the following characteristics:

→ a permeability to oxygen, measured at 23 °C under 0% relative humidity, expressed in $cm^3/m^2/24$ h and given below in an increasing order of preference, less than or equal to 0.9; 0.8; 0.7; 0.6;
→ a permeability to water vapour, measured at 38 °C under 90% relative humidity, expressed in $g/m^2/24h$ and given below in an increasing order of preference, less than or equal to 0.5; 0.4; 0.3;
→ an adhesion under wet conditions, measured in a test AT, greater than or equal to - in gf/38mm and in an increasing order of preference, 300; 400; 500.

**13.** Film according to at least one of the preceding claims, **characterized in that** it is firmly fixed with at least one other film, selected from the films according to at least one of the preceding claims, plastics, metals and similar, oxides thereof, in order to form a laminate.

**14.** Method for the production, in-line or batch production, preferably in-line, of the film according to at least one of the preceding claims,
**characterized by** the implementation of the following steps:

-a- utilizing a support as defined in at least one of the preceding claims ;
-b- optionally, carrying out a physical surface treatment of said substrate;
-c- coating at least one face of said support with a coating composition making it possible to obtain at least one layer of cross-linked adhesion primer as defined in at least one of the preceding claims;
-d- cross-linking the coating in order to obtain the layer of adhesion primer;
-e- applying a covering as defined in at least one of the preceding claims on the layer of cross-linked adhesion primer;
-f- subjecting the composite support/primer/covering assembly to a heat curing, advantageously for 1 to 50 days, preferably 5 to 20 days, and even more preferably, for 8 to 15 days, at a temperature comprised between 10 and 120°C, preferably between 30 and 90°C, and even more preferentially, between 50 and 80°C, at ambient atmospheric pressure.

**15.** Coating composition, in particular utilized in the method according to claim 14, **characterized in that** it comprises:

→ a mixture of at least two acrylic latexes L1, L2:

- L1 comprising at least one acrylic and/or methacrylic polymer P1, P1 having a gel content TG1 greater than or equal to - in % dry weight and in an increasing order of preference - 70, 80, 85, with respect to the total dry weight of P1;
- L2 comprising at least one acrylic and/or methacrylic polymer P2 different from P1, P2 having a gel content TG2 less than or equal to TG1 and less than or equal to - in % dry weight and in an increasing order of preference - 20, 40, 70 by weight with respect to the total dry weight of P2;
- P1 having a surface-grafted free weak acid content greater than or equal to - in microequivalent per gram of polymer and in an increasing order of preference - 0.8; 0.9; 1.0;
- the mass concentration of P2 is less than or equal to - in % dry weight with respect to the total dry weight of P1 and P2 and is given hereinafter in an increasing order of preference, 60, 50, 40;

→ at least one crosslinking agent;
→ preferably, at least one polymer that is soluble or dispersible in water;
→ and preferably water.

**16.** Coating composition according to claim 15, **characterized by** at least one of the following characteristics:

the latexes L1, L2 each have a dry extract of 10% to 30% by weight, preferably 15% to 25% by weight;
the weight ratio of acrylic and/or methacrylic polymers/hydrodispersible copolyester, in aqueous solution, is from 99/1 to 50/50 and is preferably situated between 97/3 and 80/20.

**17.** Article chosen from the group constituted by food and non-food packaging, films or foils for support protection and films or foils for thermal insulation and protection against humidity in the building sector, **characterized in that** it comprises at least one film according to at least one of claims 1 to 13 or such as obtained at the end of the method according to claim 14.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014102487 A1
- EP 0260203 B1
- WO 2015092329 A1
- EP 0260203 B